# EUROPEAN PATENT SPECIFICATION

(11) **EP 2 953 294 B1**
(45) Date of publication and mention of the grant of the patent: **29.03.2017**
(21) Application number: 13876351.1
(22) Date of filing: 27.02.2013
(51) Int. Cl.: H04L 12/24, H04L 12/707, H04L 12/703

(54) **PROTECTION SWITCHING METHOD, SYSTEM, AND NODE**
SCHUTZSCHALTUNGSVERFAHREN, -SYSTEM UND -KNOTEN
PROCÉDÉ, SYSTÈME, ET NOEUD POUR UNE COMMUTATION DE PROTECTION

(43) Date of publication of application: 09.12.2015
(73) Proprietor: Huawei Technologies Co., Ltd., Longgang District Shenzhen, Guangdong 518129 (CN)
(72) Inventor: ZHANG, Xian, Shenzhen Guangdong 518129 (CN); VISSERS, Maarten P.J., Shenzhen Guangdong 518129 (CN)
(74) Representative: Epping - Hermann - Fischer
(86) International application number: PCT/CN2013/071912
(87) International publication number: WO 2014/131155

(56) References cited:
- EP-A1- 2 028 774
- WO-A1-2012/088978
- CN-A- 1 392 686
- CN-A- 101 102 521
- CN-A- 102 870 431
- CN-A- 102 870 432
- US-A1- 2004 004 937
- US-B2- 7 974 183

## Description

### TECHNICAL FIELD

Embodiments of the present invention relate to the field of communications technologies, and in particular, to a protection switching method and system, and nodes.

### BACKGROUND

In a process of transmitting a service on a communications network, when a working trail over which the service is transmitted is faulty, protection switching needs to be performed.

That is, the service on the faulty trail is switched to a protection trail for transmission, so that reliability of service transmission is ensured.

Reliability may be achieved by using different protection and recovery technologies. For example, in 1+1 protection, two trails are provided for transmission of each service on an optical network, and a working trail for transmitting the service is selected from them according to signal quality of the two trails, and therefore the other trail is called a protection trail. When the working trail is faulty, the protection trail may be put into use. Therefore, the transmission of each service requires double optical network bandwidth resources, which leads to resource waste. To increase resource usage, a dynamic rerouting technology for a control plane may be used. In this solution, after the working trail over which the service is transmitted is faulty, trail reselection is performed according to current network topology information and then a connection to the protection trail is established, and a successfully established protection trail is used to transmit the service. In this way, the resource usage is higher. However, in the dynamic rerouting technology for the control plane, a switching speed of protection switching is relatively low. To reduce time required for the protection switching, an SMP (shared mesh protection, Shared Mesh Protection) technology may be used. This technology allows multiple services (that is, multiple working trails) to share protection path resources.

In a process of implementing protection switching in the SMP technology, when a working trail is faulty, first, whether a protection path resource on each intermediate node in the protection trail is available is queried hop by hop from one end node (called "a first end node") on the working trail to another end node (called "a second end node") on the working trail.

Specifically, the first end node sends a query message to a downstream neighboring node (a first intermediate node) to query whether the protection path resource is available; if the resource is unavailable, the first intermediate node returns a failure message to the first end node; if the protection path resource is available, the first intermediate node sends a query message to its downstream neighboring node (a second intermediate node) to query whether the resource is available,..., until the second end node receives the query message, which indicates that the protection path resource is available from end to end. Subsequently, a cross-connection is established hop by hop from the second end node to a first node. The second end node first establishes a cross-connection and switches the service to the protection trail, and then returns a cross-connection establishment message to its upstream neighboring node to trigger the upstream neighboring node to establish a cross-connection,..., until the first end node receives a cross-connection establishment message returned by the first intermediate node, establishes a cross-connection and switches the service to the protection trail. Then, an entire protection switching procedure is complete. However, when this solution is used, the time required for the protection switching is long and efficiency is still low.

WO 2012/088978 A1 disclosed a method for establishing a path in a wavelength division network, which is performed in a service path establishment process. If discovering that a link does not have available wavelength resources, an intermediate node returns to a source node detailed available wavelength information on causes of path congestion.

CN 102 870 431 A disclosed a method for establishing a restoration path. According to the method disclosed, a working forward-shared node set of a restoration path is obtained. If a node on the restoration path is one of the nodes in the working forward-shared node set, a label and an interface of the node on a working path are reallocated to the restoration path.

CN 102 870 432 A disclosed a method for establishing a restoration path, similar to CN 102 870 431 A. According to the method disclosed, it is determined, by a node, whether a downstream neighboring node on the restoration path is the same as that on a working path, and if the same, a label and an interface of the node on the working path are reallocated to the restoration path.

EP 2 028 774 A1 disclosed a method for realizing service protection in the automatically switched optical network. According to the method disclosed, when a failure occurs on a working path, a source node and an end node send requests to recover the path establishment in opposite directions respectively. The middle nodes on the recovering path establish connections according to the recovering path establishment request, and transmit the recovering path establishment request in every hopping, until the establishment of the recovering path is finished, and the service is switched from the working path to the recovering path.

US 2004/004937 A1 disclosed a method of providing protection switching in a meshed communications network. A protection path between two nodes on the network is only established, on demand, as it is required, after a fault along a working path between the two nodes has been detected. After the protection path is established, carriage of traffic from the working path is switched to the protection path. Once the working path is restored, traffic is switched back from the protection path to the working path, and the protection path is torn down.

US 7 974 183 B2 disclosed methods for signaling that enable bandwidth reservation, path restoration, path normalization, and path removal in a mesh network that supports shared mesh restoration. The necessary network failure restoration functionality is provided by extensions to existing signaling protocols such as RSVP-TE. Shared resources along a restoration path are reserved by sending a label switched path request with a shared restoration flag indicating that the reserved restoration resources are not to be allocated. The request also includes service path information in order to permit sufficient but necessary restoration capacity reservation along the restoration path to recover any independent shared risk link group (SRLG) failures along the service path.

### SUMMARY

Embodiments of the present invention provide a protection switching method and system, and nodes, so that protection switching can be performed quickly while resource usage is increased, thereby improving efficiency.

A first aspect provides a protection switching method, where the method includes: interrupting, by a first end node, transmission of a service flow and sending a protection switching request message to a downstream neighboring node of the first end node when a working trail between the first end node and a second end node is faulty, where the protection switching request message includes information about a first protection trail, the first protection trail includes the first end node, the second end node, and at least one intermediate node, the at least one intermediate node is located between the first end node and the second end node, and the downstream neighboring node of the first end node is a node among the at least one intermediate node; determining, by each intermediate node among the at least one intermediate node according to the information about the first protection trail, whether a protection path resource of the intermediate node is available; if the protection path resource of the intermediate node is unavailable, returning, by the intermediate node, a protection switching failure message; and if the protection path resource of the intermediate node is available, establishing, by the intermediate node, a cross-connection of the intermediate node occupied by the first protection trail, and sending the protection switching request message to a downstream neighboring node of the intermediate node, where the downstream neighboring node of the intermediate node is an intermediate node or the second end node; and establishing, by the second end node according to the protection switching request message, a cross-connection of the second end node occupied by the first protection trail, and returning a confirmation message to the first end node, so that the first end node continues the transmission of the service flow over the first protection trail according to the confirmation message.

With reference to the first aspect, in a first possible implementation manner, specific implementation of the interrupting, by a first end node, transmission of a service flow may be: establishing, by the first end node, a cross-connection of the first end node occupied by the first protection trail, and suspending switching of the service flow to the first protection trail.

With reference to the first aspect, in a second possible implementation manner, specific implementation may be: after the first end node receives the confirmation message returned by the second end node, establishing, by the first end node, a cross-connection of the first end node occupied by the first protection trail, and continuing the transmission of the service flow over the first protection trail.

With reference to the first aspect or the first possible implementation manner or the second possible implementation manner of the first aspect, in a third possible implementation manner, specific implementation of that the protection path resource of the intermediate node is available may be: the protection path resource of the intermediate node is idle; or a priority of the first protection trail is higher than a priority of a second protection trail, where the second protection trail includes a third end node, a fourth end node, and the at least one intermediate node, and the second protection trail currently occupies the protection path resource of the intermediate node.

With reference to the third possible implementation manner of the first aspect, in a fourth possible implementation manner, the protection path resource of the intermediate node is idle, and specific implementation of the determining, by the intermediate node, establishment of a cross-connection of the intermediate node occupied by the first protection trail may be: establishing, by the intermediate node, the cross-connection of the intermediate node occupied by the first protection trail.

With reference to the third possible implementation manner of the first aspect, in a fifth possible implementation manner, the priority of the first protection trail is higher than the priority of the second protection trail, and specific implementation of the determining, by the intermediate node, establishment of a cross-connection of the intermediate node occupied by the first protection trail, may be: determining, by the intermediate node, whether the intermediate node is a shared connection resource of the first protection trail and the second protection trail; if the intermediate node is the shared connection resource, reserving, by the intermediate node, a current cross-connection of the intermediate node; and if the intermediate node is not the shared connection resource, tearing down, by the intermediate node, a cross-connection of the intermediate node currently occupied by the second protection trail, and establishing the cross-connection of the intermediate node occupied by the first protection trail, where the shared connection resource means that protection path resources of links between the intermediate node and two neighboring nodes are the same on both the first protection trail and the second protection trail.

With reference to the fifth possible implementation manner of the first aspect, in a sixth possible implementation manner, before the establishing the cross-connection of the intermediate node occupied by the first protection trail, specific implementation may be: sending, by the intermediate node, a message indicating that the protection path resource is pre-empted to the third end node or the fourth end node.

With reference to the first aspect or any one of the first possible implementation manner to the sixth possible implementation manner of the first aspect, in a seventh possible implementation manner, specific implementation of the returning a confirmation message to the first end node may be: transparently transmitting the confirmation message to the first end node through an overhead channel between the first end node and the second end node and via the at least one intermediate node.

With reference to the first aspect or any one of the first possible implementation manner to the seventh possible implementation manner of the first aspect, in an eighth possible implementation manner, specific implementation of the determining, by the intermediate node according to the information about the first protection trail, whether a protection path resource of the intermediate node is available may be: determining, by the intermediate node according to the information about the first protection trail and configuration information of the intermediate node, whether the protection path resource of the intermediate node is available, where: the configuration information of the intermediate node includes an identifier of at least one protection trail, a priority of the at least one protection trail, resource occupation information of the at least one protection trail, and information about an outbound port and an inbound port of the intermediate node, and the at least one protection trail includes the first protection trail.

A second aspect provides a protection switching system, where the system includes a first end node, a second end node, and at least one intermediate node; the first end node is configured to: when a working trail between the first end node and the second end node is faulty, interrupt transmission of a service flow and send a protection switching request message to a downstream neighboring node of the first end node, where the protection switching request message includes information about a first protection trail, the first protection trail includes the first end node, the second end node, and at least one intermediate node, the at least one intermediate node is located between the first end node and the second end node, and the downstream neighboring node of the first end node is a node among the at least one intermediate node; the intermediate node is configured to: according to the information about the first protection trail, determine whether a protection path resource of the intermediate node is available; if the protection path resource of the intermediate node is unavailable, return a protection switching failure message; and if the protection path resource of the intermediate node is available, establish a cross-connection of the intermediate node occupied by the first protection trail, and send the protection switching request message to a downstream neighboring node of the intermediate node, where the downstream neighboring node of the intermediate node is an intermediate node or the second end node; and the second end node is configured to: according to the protection switching request message, establish a cross-connection of the second end node occupied by the first protection trail, and return a confirmation message to the first end node, so that the first end node continues the transmission of the service flow over the first protection trail according to the confirmation message.

With reference to the second aspect, in a first possible implementation manner, the first end node is further configured to establish a cross-connection of the first end node occupied by the first protection trail, and suspend switching of the service flow to the first protection trail.

With reference to the second aspect, in a second possible implementation manner, the first end node is further configured to: after receiving the confirmation message returned by the second end node, establish a cross-connection of the first end node occupied by the first protection trail, and continue the transmission of the service flow over the first protection trail.

With reference to the second aspect or the first possible implementation manner or the second possible implementation manner of the second aspect, in a third possible implementation manner, that the protection path resource of the intermediate node is available includes: the protection path resource of the intermediate node is idle.

With reference to the third possible implementation manner of the second aspect, in a fourth possible implementation manner, the intermediate node is further configured to establish the cross-connection of the intermediate node occupied by the first protection trail.

With reference to the second aspect or the first possible implementation manner or the second possible implementation manner of the second aspect, in a fifth possible implementation manner, the system further includes a third end node and a fourth end node, and that the protection path resource is available includes: a priority of the first protection trail is higher than a priority of a second protection trail, where the second protection trail includes the third end node, the fourth end node, and the at least one intermediate node, and the second protection trail currently occupies the protection path resource of the intermediate node.

With reference to the fifth possible implementation manner of the second aspect, in a sixth possible implementation manner, the intermediate node is further configured to: determine whether the intermediate node is a shared connection resource of the first protection trail and the second protection trail; if the intermediate node is the shared connection resource, reserve a current cross-connection of the intermediate node; and if the intermediate node is not the shared connection resource, tear down a cross-connection of the intermediate node currently occupied by the second protection trail, and establish the cross-connection of the intermediate node occupied by the first protection trail, where the shared connection resource means that protection path resources of links between the intermediate node and two neighboring nodes are the same on both the first protection trail and the second protection trail.

With reference to the sixth possible implementation manner of the second aspect, in a seventh possible implementation manner, the intermediate node is further configured to: before establishing the cross-connection of the intermediate node occupied by the first protection trail, send a message indicating that the protection path resource is pre-empted to the third end node or the fourth end node.

With reference to the second aspect or any one of the first possible implementation manner to the seventh possible implementation manner of the second aspect, in an eighth possible implementation manner, the second end node is further configured to transparently transmit the confirmation message to the first end node through an overhead channel between the first end node and the second end node and via the at least one intermediate node.

With reference to the second aspect or any one of the first possible implementation manner to the eighth possible implementation manner of the second aspect, in a ninth possible implementation manner, the intermediate node is further configured to: according to the information about the first protection trail and configuration information of the intermediate node, determine whether the protection path resource of the intermediate node is available, where the configuration information of the intermediate node includes an identifier of at least one protection trail, a priority of the at least one protection trail, resource occupation information of the at least one protection trail, and information about an outbound port and an inbound port of the intermediate node, and the at least one protection trail includes the first protection trail.

A third aspect provides a first end node, where the first end node includes: a controlling module, configured to: when a working trail between the first end node and a second end node is faulty, interrupt transmission of a service flow; a sending module, configured to send a protection switching request message to a downstream neighboring node of the first end node, where the protection switching request message includes information about a first protection trail, the first protection trail includes the first end node, the second end node, and at least one intermediate node, and the at least one intermediate node is located between the first end node and the second end node, so that each intermediate node among the at least one intermediate node determines, according to the information about the first protection trail, whether a protection path resource of the intermediate node is available, where the downstream neighboring node of the first end node is a node among the at least one intermediate node; and a receiving module, configured to: receive a protection switching failure message returned by the intermediate node, where the protection switching failure message is used to indicate that the protection path resource of the intermediate node is unavailable; or receive a confirmation message returned by the second end node so as to continue the transmission of the service flow over the first protection trail according to the confirmation message.

With reference to the third aspect, in a first possible implementation manner, the controlling module is specifically configured to establish a cross-connection of the first end node occupied by the first protection trail, and suspend switching of the service flow to the first protection trail.

With reference to the third aspect, in a second possible implementation manner, the controlling module is further configured to: after the receiving module receives the confirmation message returned by the second end node, establish a cross-connection of the first end node occupied by the first protection trail, and continue the transmission of the service flow over the first protection trail.

A fourth aspect provides a second end node, where the second end node includes: a receiving module, configured to receive a protection switching request message sent by an upstream neighboring node of the second end node, where the protection switching request message includes information about a first protection trail, the first protection trail includes a first end node, the second end node, and at least one intermediate node, the at least one intermediate node is located between the first end node and the second end node, and the upstream neighboring node of the second end node is a node among the at least one intermediate node; a controlling module, configured to: according to the protection switching request message, establish a cross-connection of the second end node occupied by the first protection trail; and a sending module, configured to return a confirmation message to the first end node, so that the first end node continues transmission of a service flow over the first protection trail according to the confirmation message.

With reference to the fourth aspect, in a first possible implementation manner, the sending module is further configured to transparently transmit the confirmation message to the first end node through an overhead channel between the first end node and the second end node and via the at least one intermediate node.

In the embodiments of the present invention, when a working trail between a first end node and a second end node is faulty, the first end node interrupts transmission of a service flow and sends a protection switching request message hop by hop to each intermediate node among at least one intermediate node of a first protection trail; each intermediate node determines, according to information about the first protection trail in the protection switching request message, whether its own protection path resource is available, where the protection path resource may be shared by multiple working trails; after receiving the protection switching request message, if determining that the protection path resource is available, each intermediate node determines establishment of a cross-connection occupied by the first protection trail, and the second end node returns a confirmation message to the first end node, thereby reducing time required for protection switching. In this way, the protection switching can be performed quickly while resource usage is increased, thereby improving efficiency. In addition, the transmission of the service flow is interrupted when the first end node initiates a protection switching process, thereby preventing service misconnection in the protection switching process.

### BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a protection switching method according to an embodiment of the present invention;
FIG. 2 is a schematic flowchart of a process of a protection switching method according to an embodiment of the present invention;
FIG. 3 is a schematic flowchart of a process of a protection switching method according to another embodiment of the present invention;
FIG. 4 is a schematic flowchart of a process of a protection switching method according to still another embodiment of the present invention;
FIG. 5 is a schematic block diagram of a protection switching system according to an embodiment of the present invention;
FIG. 6 is a schematic block diagram of a protection switching system according to an embodiment of the present invention;
FIG. 7 is a structural block diagram of a first end node according to an embodiment of the present invention;
FIG. 8 is a structural block diagram of a second end node according to an embodiment of the present invention;
FIG. 9 is a schematic block diagram of a device according to an embodiment of the present invention;
FIG. 10 is a structural block diagram of a first end node according to another embodiment of the present invention; and
FIG. 11 is a structural block diagram of a second end node according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

The technical solutions in the embodiments of the present invention may be applied to an optical network such as an SDH (Synchronous Digital Hierarchy, synchronous digital hierarchy)/SONET (Synchronous Optical Network, synchronous optical network), or an OTN (Optical Transport Network, optical transport network).

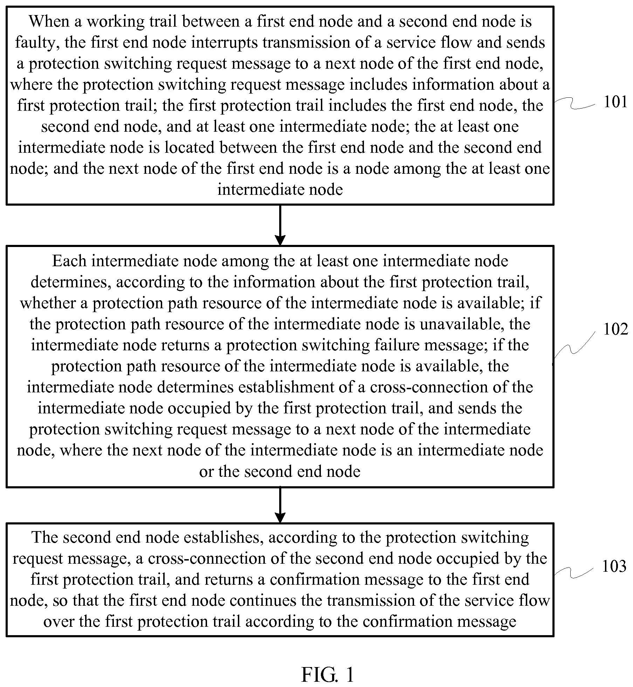

FIG. 1 is a flowchart of a protection switching method according to an embodiment of the present invention.

101. When a working trail between a first end node and a second end node is faulty, the first end node interrupts transmission of a service flow and sends a protection switching request message to a downstream neighboring node of the first end node, where the protection switching request message includes information about a first protection trail; the first protection trail includes the first end node, the second end node, and at least one intermediate node; the at least one intermediate node is located between the first end node and the second end node; and the downstream neighboring node of the first end node is a node among the at least one intermediate node.

102. Each intermediate node among the at least one intermediate node determines, according to the information about the first protection trail, whether a protection path resource of the intermediate node is available; if the protection path resource of the intermediate node is unavailable, the intermediate node returns a protection switching failure message; if the protection path resource of the intermediate node is available, the intermediate node determines establishment of a cross-connection of the intermediate node occupied by the first protection trail, and sends the protection switching request message to a downstream neighboring node of the intermediate node, where the downstream neighboring node of the intermediate node is an intermediate node or the second end node.

103. The second end node establishes, according to the protection switching request message, a cross-connection of the second end node occupied by the first protection trail, and returns a confirmation message to the first end node, so that the first end node continues the transmission of the service flow over the first protection trail according to the confirmation message.

In the present invention, the first end node may be either of the two end nodes on the first protection trail, and may be a source node or a destination node, which is not limited by this embodiment of the present invention.

Protection path resources of a node refer to a protection path resource of a corresponding protection trail in a link between the node and its upstream neighboring node and a protection path resource of the corresponding protection trail in a link between the node and its downstream neighboring node. Establishing a cross-connection of the first protection trail on an intermediate node refers to establishing a cross-connection that is corresponding to the first protection trail and is between a protection path resource in a link between the node and its upstream neighboring node and a protection path resource in a link between the node and its downstream neighboring node.

It should be understood that there may be one or more protection path resources in a link between nodes, and there may be one or more cross-connections of the node, which are not limited by this embodiment of the present invention. For ease of description, it is assumed that there is one protection path resource in the link between the nodes in this embodiment of the present invention.

In this embodiment of the present invention, when a working trail between a first end node and a second end node is faulty, the first end node interrupts transmission of a service flow and sends a protection switching request message hop by hop to each intermediate node among at least one intermediate node of a first protection trail; each intermediate node determines, according to information about the first protection trail in the protection switching request message, whether its own protection path resource is available, where the protection path resource may be shared by multiple working trails; after receiving the protection switching request message, if determining that the protection path resource is available, each intermediate node determines establishment of a cross-connection occupied by the first protection trail, and the second end node returns a confirmation message to the first end node, thereby reducing time required for protection switching. In this way, the protection switching can be performed quickly while resource usage is increased, thereby improving efficiency. In addition, the transmission of the service flow is interrupted when the first end node initiates a protection switching process, thereby preventing service misconnection in the protection switching process.

Optionally, as an embodiment, in an implementation manner, in step 101, the first end node establishes a cross-connection of the first end node occupied by the first protection trail, and suspends switching of the service flow to the first protection trail; after the first end node receives the confirmation message returned by the second end node, the first end node continues the transmission of the service flow over the first protection trail. In another implementation manner, after the first end node receives the confirmation message returned by the second end node, the first end node establishes a cross-connection of the first end node occupied by the first protection trail, and continues the transmission of the service flow over the first protection trail. It should be understood that this embodiment of the present invention does not limit an order of establishing the cross-connection by the first end node.

Therefore, the transmission of the service flow is interrupted when the first end node learns occurrence of a fault on the working trail and initiates the protection switching process, and a service is switched to the protection trail only after the confirmation message returned by the second end node is received, that is, after it is determined that the protection path resource of each node on the first protection trail is available. In this way, service misconnection is prevented in the protection switching process, and reliability of the protection switching is improved.

Optionally, as another embodiment, a case in which the protection path resource is available in step 102 may be that: the protection path resource is idle, that is, not occupied by any protection trail; or, the protection path resource is occupied by a lower-priority protection trail (a second protection trail), that is, a priority of the first protection trail is higher than a priority of the second protection trail (for example, priority levels of protection trails may be arranged according to service types or according to fault types of working trails), where the second protection trail includes a third end node, a fourth end node, and the at least one intermediate node, and the second protection trail currently occupies the protection path resource of the intermediate node.

Specifically, it is assumed that a working trail between an end node S1 and an end node D1 is W1 and a protection trail P1 of the working trail W1 is S1-A1-A2-A3-A4-D1; a working trail between an end node D2 and an end node S2 is W2 and a protection trail P2 of the working trail W2 is D2-A1-A2-A3-A4-S2, where the nodes A1, A2, A3, and A4 are intermediate nodes of the protection trail P1, and are also intermediate nodes of the protection trail P2; it is assumed that the protection trail P1 and the protection trail P2 share protection path resources in links A1-A2, A2-A3, and A3-A4. Therefore, when the protection trail P2 (the second protection trail) occupies the protection path resources of the intermediate nodes A1, A2, A3, and A4, the end node S1 requests protection switching to the protection trail P1. If a priority of the protection trail P1 (the first protection trail) is higher than a priority of the protection trail P2, for the protection trail P1, the protection path resources of the intermediate nodes A1, A2, A3, and A4 are available.

Optionally, when the intermediate node determines that the protection path resource of the intermediate node is idle, the intermediate node establishes the cross-connection of the intermediate node occupied by the first protection trail, and sends the protection switching request message to the downstream neighboring node of the intermediate node; if the downstream neighboring node of the intermediate node is still an intermediate node, the intermediate node continues to determine whether the protection resource is available. The determining process goes on until the second end node receives the protection switching request message, which indicates that the first protection trail may be put into use.

Optionally, when the second protection trail occupies a protection path resource of the current intermediate node, the intermediate node determines that the priority of the first protection trail is higher than the priority of the second protection trail, and the intermediate node further determines whether the intermediate node is a shared connection resource of the first protection trail and the second protection trail; if the intermediate node is the shared connection resource, the intermediate node reserves a current cross-connection; if the intermediate node is not the shared connection resource, the intermediate node tears down a cross-connection of the intermediate node currently occupied by the second protection trail, and establishes the cross-connection of the intermediate node occupied by the first protection trail, where the shared connection resource means that protection path resources of links between the intermediate node and two neighboring nodes are the same on both the first protection trail and the second protection trail.

It should be noted that the established cross-connection may be bidirectional or unidirectional, which is not limited by this embodiment of the present invention.

For example, the protection trail P2 is the second protection trail, and currently occupies the protection path resources of the intermediate nodes A1, A2, A3, and A4. Because the protection path resources in the links A1-A2 and A2-A3 are the same on both the protection trail P1 and the protection trail P2, the intermediate node A2 is a shared connection resource of the protection trail P1 and the protection trail P2; similarly, the intermediate node A3 is also a shared connection resource of the protection trail P1 and the protection trail P2. For the intermediate nodes A2 and A3, the current cross-connection may be reserved. However, protection path resources of the intermediate node A1 in the protection trail P1 are the protection path resources in the links A1-S1 and A1-A2, and protection path resources of the intermediate node A1 on the protection trail P2 are the protection path resources in the links A1-D2 and A1-A2; similarly, protection path resources of the intermediate node A4 on the protection trail P1 are the protection path resources in the links A4-D1 and A4-A3, and protection path resources of the intermediate node A4 on the protection trail P2 are the protection path resources in the links A4-S2 and A4-A3. Therefore, the intermediate nodes A1 and A4 are not shared connection resources of the protection trail P1 and the protection trail P2; for the intermediate nodes A1 and A4, the current cross-connection needs to be torn down and a new cross-connection needs to be established. That is, the cross-connection occupied by the second protection trail is torn down, and the cross-connection occupied by the first protection trail is established. Further, the intermediate node may send a message indicating that the protection path resource is pre-empted to the third end node or the fourth end node.

Optionally, the message indicating that the protection path resource is pre-empted may be sent by using a hop-by-hop overhead channel between an intermediate node and an end point, or may be sent in a transparent transmission manner by using the overhead channel between the intermediate node and the end point. That the node receives the message from the hop-by-hop overhead channel means that the received message needs to be deciphered and the node also needs to process the received message, for example, modify message content, change an overhead channel used to transmit the message to a downstream neighboring node.

According to this embodiment of the present invention, when a higher-priority protection trail pre-empts a shared protection path resource of a lower-priority protection trail, an intermediate node serving as a shared connection resource does not need to configure a cross-connection repeatedly, thereby reducing operation complexity, further reducing time of protection switching, and improving efficiency.

It should be understood that the foregoing example is merely exemplary and is not intended to limit the scope of the present invention. For example, there may be two or more protection trails and there may be one or more nodes shared on multiple protection trails, and the shared connection resources on different protection trails may be one intermediate node or may be multiple intermediate nodes.

Optionally, as another embodiment, in step 103, the confirmation message may be transmitted transparently to the first end node through an overhead channel between the first end node and the second end node and via the at least one intermediate node. The established first protection trail may provide an end-to-end overhead path. Therefore, the intermediate node does not need to decipher or process the confirmation message, and the second end node may transparently transmit the confirmation message to the first end node directly via the intermediate node, thereby further reducing the time of protection switching. Certainly, the confirmation message may also be returned to the first end node by using a hop-by-hop overhead path, which is not limited by this embodiment of the present invention.

Optionally, as another embodiment, in step 102, the intermediate node may determine, according to the information about the first protection trail and configuration information of the intermediate node, whether the protection path resource is available, where the configuration information of the intermediate node may include an identifier of at least one protection trail, a priority of the at least one protection trail, resource occupation information of the at least one protection trail, and information about an inbound port and an outbound port of the intermediate node, and the like. The at least one protection trail includes the first protection trail. The configuration information of the intermediate node may be preset on a corresponding intermediate node. The intermediate node may change the configuration information of the intermediate node. For example, after the intermediate node receives a protection switching request of the first protection trail, if the protection path resource of the intermediate node is available and the protection path resource of the intermediate node is idle, the intermediate node establishes a cross-connection and may modify the resource occupation information to that the resource is occupied by the first protection trail.

Specifically, the intermediate node receives the protection switching request, and may determine, according to a correspondence between the information about the protection trail and an identifier of the protection trail, which are in the protection switching request message, a protection trail that requests protection switching and determine priority level information of the protection trail. Further, the intermediate node may determine, according to outbound and inbound port numbers or according to outbound and inbound port resources, whether the intermediate node is a shared connection resource of different protection trails. For example, same port numbers (port resources) for different protection trails indicate that the intermediate node is a shared node of different protection trails; same outbound and inbound port numbers (outbound and inbound port resources) for different protection trails indicate that the intermediate node is a shared connection resource of different protection trails. Whether the protection path resource of the node is available may be determined according to a priority level and/or the resource occupation information of the protection trail. The configuration information of the intermediate node may be illustratively represented as follows (in a tabular form):

**Table 1 Configuration information of the intermediate node A1 (using an S1-to-D1 direction as a reference direction)**

| Protection trail identifier | Inbound port | Inbound port resource | Outbound port | Outbound port resource | Priority | Resource occupation information |
|---|---|---|---|---|---|---|
| P1 | Port 1 | Resource 1 | Port 3 | Resource 2 | 2 | Not in use |
| P2 | Port 2 | Resource 3 | Port 3 | Resource 2 | 1 | Not in use |

**Table 2 Configuration information of the intermediate node A2 (using an S1-to-D1 direction as a reference direction)**

| Protection trail identifier | Inbound port | Inbound port resource | Outbound port | Outbound port resource | Priority | Resource occupation information |
|---|---|---|---|---|---|---|
| P1 | Port 3 | Resource 2 | Port 4 | Resource 4 | 2 | Not in use |
| P2 | Port 3 | Resource 2 | Port 4 | Resource 4 | 1 | Not in use |

The configuration information of the intermediate node A1 listed in Table 1 includes identifiers of protection trails, such as the identifier P1 of the protection trail (S1-A1-A2-A3-A4-D1) and the identifier P2 of the protection trail (D2-A1-A2-A3-A4-S2); priorities of the protection trails, for example, the priority 1 of the protection trail P1 and the priority 2 of the protection trail P2, where the priority level in Table 1 is represented by a number, and a smaller number indicates a higher priority; the outbound and inbound port information of the intermediate node A1 (using the S1-to-D1 direction as the reference direction), for example, the inbound port number Port 1 (that is, the outbound port number of the first end node S1), the inbound port resource 1 (this identifier is corresponding to the first end node S1), the outbound port number Port 3 (that is, the inbound port number of the intermediate node A2) and the inbound port resource 2 (this identifier is corresponding to the intermediate node A2) that are corresponding to the protection trail P1, the inbound port number Port 2 (that is, the outbound port number of the third end node D2), the inbound port resource 3 (this identifier is corresponding to the third end node D2), the outbound port number Port 3, and the inbound port resource 2 that are corresponding to the protection trail P2. The protection trail P1 and the protection trail P2 have a same outbound port resource but different inbound port resources, and the intermediate node A1 is not a shared connection resource of the two protection trails. In a specific network, such as an OTN (Optical Transport Network, optical transport network), resources of the outbound and inbound ports may be represented by an ODUk (Optical Channel Data Unit, optical channel data unit, where k represents bandwidth) or a TS (Tributary Slot, tributary slot) number (such as TS1 or TS2).

Similarly, the configuration information of the intermediate node A2 listed in Table 2 includes the identifiers of the protection trails, such as the identifier P1 of the protection trail P1 and the identifier P2 of the protection trail P2; the priorities of the protection trails, for example, the priority 1 of the protection trail P1 and the priority 2 of the protection trail P2; the outbound and inbound port information of the intermediate node A2, for example, the inbound port number Port 2 (that is, the outbound port number of the intermediate node A1), the inbound port resource 2 (this identifier is corresponding to the intermediate node A1), the outbound port number Port 4 (that is, the inbound port number of the intermediate node A3) and the inbound port resource 4 (this identifier is corresponding to the intermediate node A3) that are corresponding to the protection trail P1, the inbound port number Port 2, the inbound port resource 4, the outbound port number Port 4, and the inbound port resource 4 that are corresponding to the protection trail P2. The protection trail P1 and the protection trail P2 have same outbound and inbound port resources, and the intermediate node A2 is a shared connection resource of the two protection trails.

To avoid repeated description, the configuration information of other intermediate nodes is not described by using examples.

It should be understood that, in the foregoing example, the form in which the configuration information of the intermediate node is represented, data of the protection trail, the priority representation manner, and the information about the outbound and inbound ports, and the like, are merely exemplary but are not intended to limit the scope of the present invention.

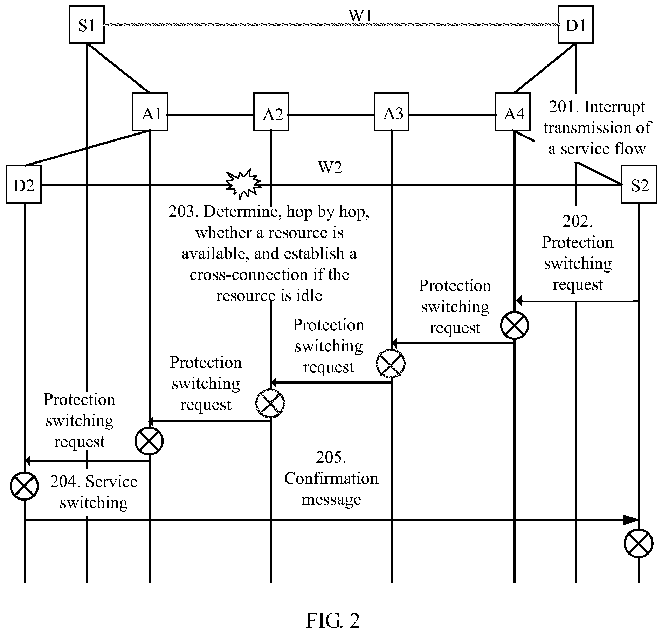

The following describes the embodiments of the present invention in more detail with reference to examples in FIG. 2 to FIG. 4. For ease of description, the embodiments in FIG. 2 to FIG. 4 are described based on the assumption that two protection trails exist: the protection trail P1 (S1-A1-A2-A3-A4-D1) and the protection trail P2 (D2-A1-A2-A3-A4-S2). The working trail between the end node S1 and the end node D1 is W1, the working trail between the end node D2 and the end node S2 is W2, and it is assumed that the protection trail P1 and the protection trail P2 share protection path resources in the links A1-A2, A2-A3, and A3-A4.

It should be understood that the embodiments of the present invention set no limitation on that, and there may be more protection trails; further, it should be understood that the embodiments of the present invention set no limitation on the number of intermediate nodes, and there may be more or less intermediate nodes. It should also be noted that shared nodes of different protection trails are not necessarily all of the intermediate nodes.

FIG. 2 is a schematic flowchart of a process of a protection switching method according to an embodiment of the present invention. In a scenario in FIG. 2, the working trail W1 is normal, the working trail W2 is faulty (that is, the protection trail P2 is used as an example of the foregoing first protection trail), and the end node S2 initiates a protection switching procedure.

It should be understood that, in this embodiment of the present invention, it may also be that the end node D2 initiates the protection switching procedure.

Step 201: The end node S2 interrupts transmission of a service flow.

Optionally, in an implementation manner, the end node S2 may first establish a cross-connection and suspend switching of the service flow to the protection trail P2; in another implementation manner, the end node S2 temporarily does not establish a cross-connection.

It should be understood that this embodiment of the present invention does not limit an order of establishing the cross-connection by the end node S2. It should also be noted that the established cross-connection may be bidirectional or unidirectional, which is not limited by this embodiment of the present invention.

Step 202: The end node S2 sends a protection switching request message to a downstream neighboring node (the intermediate node A4) of the end node S2, where the protection switching request message carries information about the protection trail P2 (such as the identifier P2).

Step 203: The intermediate node A4 determines, according to the received protection switching request message, whether a protection path resource of A4 is available. Optionally, the intermediate node A4 may determine, according to the information about the protection trail P2 and preset configuration information of the intermediate node A4, whether the protection path resource of A4 is available. For example, the configuration information of the intermediate node A4 may be illustratively represented as follows (in a tabular form):

**Table 3 Configuration information of the intermediate node A4 (using an S1-to-D1 direction as a reference direction)**

| Protection trail identifier | Inbound port | Inbound port resource | Outbound port | Outbound port resource | Priority | Resource occupation information |
|---|---|---|---|---|---|---|
| P1 | Port 5 | Resource 5 | Port 6 | Resource 6 | 2 | Not in use |
| P2 | Port 5 | Resource 5 | Port 7 | Resource 7 | 1 | Not in use |

According to the information about the protection trail P2 (such as the identifier P2) in the protection switching request message, the intermediate node A4 may determine that the protection trail P2 requests the switching of the protection trail. Further, according to a fact that the resource occupation information of each protection trail in the configuration information of the intermediate node A4 is Not in use, the intermediate node A4 determines that the protection path resource of A4 is idle, establishes a cross-connection of A4 occupied by the protection trail P2 (that is, establishes a cross-connection between the protection path resource in the link A3-A4 and the protection path resource in the link A4-S2), and sends the protection switching request message to a downstream neighboring node (the intermediate node A3) of the intermediate node A4. Optionally, the intermediate node A4 changes the configuration information of the intermediate node A4 correspondingly, and records the resource occupation information as that the resource is occupied by P2.

Similarly, the intermediate node A3 receives the protection switching request message, and, according to the protection switching request message and the configuration information of the intermediate node A3, may determine that the protection path resource of A3 is idle, establish a cross-connection of A3 occupied by the protection trail P2, and send the protection switching request message to a downstream neighboring node (the intermediate node A2) of the intermediate node A3. The process goes on until the end node D2 receives the protection switching request message, which indicates that the protection trail P2 is available.

Step 204: The end node D2 establishes a cross-connection occupied by the protection trail P2, and optionally, switches a service to the protection trail P2.

Step 205: The end node D2 returns a confirmation message to the end node S2.

Optionally, the confirmation message may be transparently transmitted to the end node S2 through an overhead channel between the end node D2 and the end node S2 and via the intermediate nodes A1 to A4. The established protection trail P2 may provide an end-to-end overhead path. Therefore, the intermediate nodes do not need to decipher or process the confirmation message, and the end node D2 may transparently transmit the confirmation message to the end node S2 directly via the intermediate nodes, thereby further reducing the time of protection switching.

Certainly, the confirmation message may also be returned to the end node S2 by using a hop-by-hop overhead path, which is not limited by this embodiment of the present invention.

Optionally, after the end node S2 receives the confirmation message returned by the end node D2, the end node D2 continues the transmission of the service flow over the first protection trail. After establishing the cross-connection, the end node S2 continues the transmission of the service flow over the protection trail P2. If the end node S2 has not established the cross-connection, the end node S2 establishes the cross-connection, switches the service to the protection trail P2, and continues the transmission of the service flow.

According to the foregoing solution, when determining that a protection channel resource is available, each intermediate node on a protection trail establishes a cross-connection of the node occupied by the protection trail, thereby reducing time required for protection switching. In this way, the protection switching can be performed quickly while resource usage is increased, thereby improving efficiency.

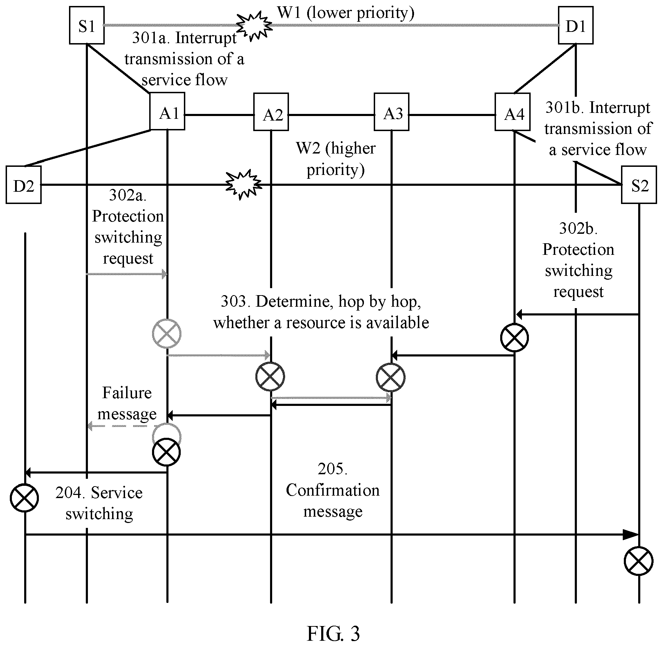

FIG. 3 is a schematic flowchart of a process of a protection switching method according to another embodiment of the present invention. Steps that are the same as or similar to the steps in FIG. 2 use same reference signs in the accompanying drawings. To avoid repetition, no repeated description is given here anymore. In a scenario in FIG. 3, both the working trail W1 and the working trail W2 are faulty, and both the end node S1 and the end node S2 initiate protection switching procedures. It should be understood that, in this embodiment of the present invention, it may also be that the end node S1 and the end node D2 initiate the protection switching procedures, or it may be that the end node D1 and the end node S2 initiate the protection switching procedures, which is not limited by this embodiment of the present invention.

Step 301a: The end node S2 interrupts transmission of a service flow.

Step 301b: The end node S1 interrupts transmission of a service flow.

Optionally, in an implementation manner, the end node S1 may first establish a cross-connection occupied by the protection trail P1, and suspend switching of the service flow to the protection trail P1; in another implementation manner, the end node S1 temporarily does not establish a cross-connection. Similarly, the end node S2 may also interrupt transmission of a service flow in the foregoing manner.

It should be understood that this embodiment of the present invention does not limit an order of initiating the protection switching procedures by the end node S1 and the end node S2. It should also be noted that the established cross-connection may be bidirectional or unidirectional, which is not limited by this embodiment of the present invention.

Step 302a: The end node S1 sends a protection switching request message to a downstream neighboring node (the intermediate node A1) of the end node S1, where the protection switching request message carries information (such as an identifier P1) about the protection trail P1.

Step 302b: The end node S2 sends a protection switching request message to a downstream neighboring node (the intermediate node A4) of the end node S2, where the protection switching request message carries information (such as an identifier P2) of the protection trail P2.

Step 303: The intermediate node A4 determines, according to the received protection switching request message sent by the end node S2, whether a protection path resource of A4 is available. Optionally, the intermediate node A4 may determine, according to the information about the protection trail P2 and preset configuration information of the intermediate node A4, whether the protection path resource of A4 is available. According to the information about the protection trail P2 (such as the identifier P2) in the protection switching request message, the intermediate node A4 may determine that the protection trail P2 requests the switching of the protection trail. Further, according to a fact that the resource occupation information of each protection trail in the configuration information of the intermediate node A4 is Not in use, the intermediate node A4 determines that the protection path resource of A4 is idle, establishes a cross-connection of A4 occupied by the protection trail P2, and sends the protection switching request message to a downstream neighboring node (the intermediate node A3) of the intermediate node A4. Optionally, the intermediate node A4 changes the configuration information of the intermediate node A4 correspondingly, and records the resource occupation information as that the resource is occupied by P2.

Similarly, the intermediate node A3 receives the protection switching request message sent by the intermediate node A4, and, according to the protection switching request message and configuration information of the intermediate node A3, may determine that the protection path resource is idle, and establish a cross-connection of A3 occupied by the protection trail P2.

For specific examples, reference may be made to the foregoing description, and no repeated description is given here anymore.

In a process of establishing the protection trail P1, according to the received protection switching request message sent by the end node S1, the intermediate node A1 determines whether a protection path resource is available. Optionally, the intermediate node A1 may determine, according to the information about the protection trail P1 and preset configuration information of the intermediate node A1, whether the protection path resource of A1 is available. According to the information about the protection trail P1 (such as the identifier) in the protection switching request message, the intermediate node A1 may determine that the protection trail P1 requests the switching of the protection trail. Further, according to a fact that the resource occupation information of each protection trail in the configuration information of the intermediate node A1 is Not in use, the intermediate node A1 determines that the protection path resource of A1 is idle, establishes a cross-connection of A1 occupied by the protection trail P1, and sends the protection switching request message to a downstream neighboring node (the intermediate node A2) of the intermediate node A1.

Optionally, the intermediate node A1 changes the configuration information of the intermediate node A1 correspondingly, and records the resource occupation information as that the resource is occupied by P1.

Similarly, the intermediate node A2 receives the protection switching request message sent by the intermediate node A1, and, according to the protection switching request message and the configuration information of the intermediate node A2, may determine that a protection path resource of A2 is idle, and establish a cross-connection of A2 occupied by the protection trail P1. For specific examples, reference may be made to the foregoing description, and no repeated description is given here anymore.

When the intermediate node A2 and the intermediate node A3 separately send the protection switching request message to their respective downstream neighboring node, a conflict may occur. That is, the intermediate node A2 and the intermediate node A3 separately receive one of protection switching request messages which are used by different protection trails to request occupation of a same protection path resource. Certainly, in this embodiment of the present invention, it is also possible that a conflict occurs on only one intermediate node (the intermediate node A2 or the intermediate node A3). In the following description, an example in which a conflict occurs on both the intermediate node A2 and the intermediate node A3 is used. It should be understood that this embodiment of the present invention sets no limitation on that.

In this embodiment, the intermediate node A3 receives a protection switching request message sent by the intermediate node A2, where the protection switching request message carries the information about the protection trail P1, and determines, according to the information about the protection trail P1, whether a protection path resource is available.

Optionally, the intermediate node A3 determines, according to the information about the protection trail P1 and preset configuration information of the intermediate node A3, whether the protection path resource of A3 is available. For example, the configuration information of the intermediate node A3 may be illustratively represented as follows (in a tabular form):

**Table 4 Configuration information of the intermediate node A3 (using an S1-to-W1 direction as a reference direction)**

| Protection trail identifier | Inbound port | Inbound port resource | Outbound port | Outbound port resource | Priority | Resource occupation information |
|---|---|---|---|---|---|---|
| P1 | Port 4 | Resource 4 | Port 5 | Resource 5 | 2 | Occupied by P2 |
| P2 | Port 4 | Resource 4 | Port 5 | Resource 5 | 1 | Occupied by P2 |

According to the information about the protection trail P1 (such as the identifier P1) in the protection switching request message, the intermediate node A3 may determine that the protection trail P1 requests the switching of the protection trail, and determine that the protection path resource of A3 is already occupied by the protection trail P2. Further, the intermediate node A3 determines priority levels of the protection trail P1 and the protection trail P2, where the priority of the protection trail P2 is higher than the priority of the protection trail P1. The intermediate node A3 determines that the protection path resource of A3 is unavailable for the protection trail P1, and optionally, returns a protection switching failure message to the intermediate node A2.

The intermediate node A2 receives a protection switching request message sent by the intermediate node A3, where the protection switching request message carries the information about the protection trail P2, and determines, according to the information about the protection trail P2, whether the protection path resource of A2 is available. Optionally, the intermediate node A2 determines, according to the information about the protection trail P2 and preset configuration information of the intermediate node A2, whether the protection path resource is available. For example, the configuration information of the intermediate node A2 may be illustratively represented as follows (in a tabular form):

**Table 5 Configuration information of the intermediate node A2 (using the S1-to-W1 direction as a reference direction)**

| Protection trail identifier | Inbound port | Inbound port resource | Outbound port | Outbound port resource | Priority | Resource occupation information |
|---|---|---|---|---|---|---|
| P1 | Port 3 | Resource 2 | Port 4 | Resource 4 | 2 | Occupied by P1 |
| P2 | Port 3 | Resource 2 | Port 4 | Resource 4 | 1 | Occupied by P1 |

According to the information about the protection trail P2 (such as the identifier P2) in the protection switching request message, the intermediate node A2 may determine that the protection trail P2 requests the switching of the protection trail, and determine that the protection path resource 2 is already occupied by the protection trail P1. Further, the intermediate node A2 determines the priority levels of the protection trail P1 and the protection trail P2, where the priority of the protection trail P2 is higher than the priority of the protection trail P1. The protection path resource A2 is occupied by the lower-priority protection trail (the protection trail P1), and it is determined that the protection path resource of A2 is available. Still further, the intermediate node A2 determines that the protection trail P1 and the protection trail P2 have same outbound and inbound port resources, and the intermediate node A2 is a shared connection resource of the two protection trails. In other words, the protection path resources of the protection trail P1 and the protection trail P2 in both the link A1-A2 and the link A2-A3 are the same. Therefore, the intermediate node A2 may reserve the established cross-connection, and send a protection switching request message, which is for establishing the protection trail P2, to a downstream neighboring node (the intermediate node A1) of the intermediate node A2. Optionally, the intermediate node A2 changes the configuration information of the intermediate node A2 correspondingly, and records the resource occupation information as that the resource is occupied by P2.

The intermediate node A1 receives the protection switching request message sent by the intermediate node A2, where the protection switching request message carries the information about the protection trail P2, and determines, according to the information about the protection trail P2, whether the protection path resource of A1 is available. Optionally, the intermediate node A1 determines, according to the information about the protection trail P2 and the preset configuration information of the intermediate node A1, whether the protection path resource of A1 is available. For example, the configuration information of the intermediate node A1 may be illustratively represented as follows (in a tabular form):

**Table 6 Configuration information of the intermediate node A1**

| Protection trail identifier | Inbound port | Inbound port resource | Outbound port | Outbound port resource | Priority | Resource occupation information |
|---|---|---|---|---|---|---|
| P1 | Port 1 | Resource 1 | Port 3 | Resource 2 | 2 | Occupied by P1 |
| P2 | Port 2 | Resource 3 | Port 3 | Resource 2 | 1 | Occupied by P1 |

According to the information about the protection trail P2 (such as the identifier P2) in the protection switching request message, the intermediate node A1 may determine that the protection trail P2 requests the switching of the protection trail, and determine that the protection path resource of A1 is already occupied by the protection trail P1. Further, the intermediate node A1 determines the priority levels of the protection trail P1 and the protection trail P2, where the priority of the protection trail P2 is higher than the priority of the protection trail P1. The protection path resource of A1 is occupied by the lower-priority protection trail (the protection trail P1), and it is determined that the protection path resource of A1 is available. Still further, the intermediate node A1 determines that the protection trail P1 and the protection trail P2 have a same outbound port resource but different inbound port resources. In other words, the protection path resource of A1 is not completely the same in the protection trail P1 and the protection trail P2, and the intermediate node A1 is not a shared connection resource of the two protection trails. Therefore, the intermediate node A1 tears down the current cross-connection, and establishes a cross-connection of A1 occupied by the protection trail P2, that is, establishes a cross-connection between the protection path resource in the link A1-A2 and the protection path resource in the link A1-D2, and sends a protection switching request message, which is for establishing the protection trail P2, to the end node D2. Optionally, the intermediate node A1 changes the configuration information of the intermediate node A1 correspondingly, and records the resource occupation information as that the resource is occupied by P2. Optionally, the intermediate node A1 returns a protection switching failure message to the end node S 1.

It should be understood that, in this embodiment of the present invention, a conflict may occur between the intermediate node A1 and the intermediate node A2, or a conflict may occur between the intermediate node A3 and the intermediate node A4, which is not limited by this embodiment of the present invention.

If the end node S1 and the end node S2 switch a service to a protection trail when initiating a protection switching procedure, in a process of establishing a protection switching trail, service misconnection tends to occur on nodes on which a conflict occurs. Therefore, based on the technical solution of the present invention, the end node S2 interrupts the transmission of the service flow after learning that the working trail is faulty, thereby preventing service misconnection in the process of establishing a protection trail, and improving reliability of protection switching.

According to the foregoing solution, when determining that a protection path resource is available, each intermediate node on a protection trail establishes a cross-connection of the node occupied by the protection trail, thereby reducing time required for protection switching.

In this way, the protection switching can be performed quickly while resource usage is increased, thereby improving efficiency.

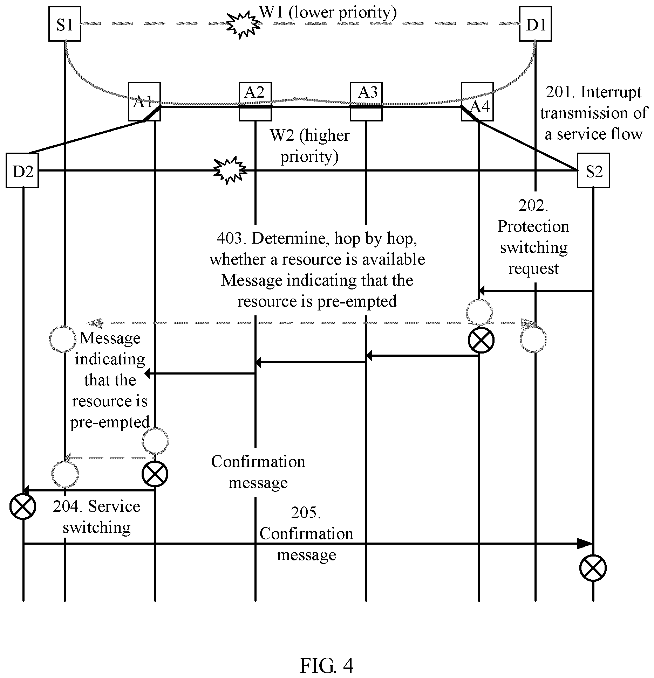

FIG. 4 is a schematic flowchart of a process of a protection switching method according to still another embodiment of the present invention. Steps that are the same as or similar to the steps in FIG. 2 use same reference signs in the accompanying drawings. To avoid repetition, no repeated description is given here anymore. In a scenario in FIG. 4, the working trail W1 is faulty, and the protection trail P1 is already in use, that is, has occupied protection path resources in shared links A1-A2, A2-A3, and A3-A4 of the protection trail P1 and the protection trail P2. When the working trail W2 is faulty, the end node S2 initiates a protection switching procedure. It should be understood that, in this embodiment of the present invention, it may also be that the end node D2 initiates the protection switching procedure.

Step 403: The intermediate node A4 determines, according to a received protection switching request message, whether a protection path resource of A4 is available. Optionally, the intermediate node A4 may determine, according to information about the protection trail P2 and preset configuration information of the intermediate node A4, whether the protection path resource of A4 is available. For example, the configuration information of the intermediate node A4 may be illustratively represented as follows (in a tabular form):

**Table 7 Configuration information of the intermediate node A4 (using an S1-to-W1 direction as a reference direction)**

| Protection trail identifier | Inbound port | Inbound port resource | Outbound port | Outbound port resource | Priority | Resource occupation information |
|---|---|---|---|---|---|---|
| P1 | Port 5 | Resource 5 | Port 6 | Resource 6 | 2 | Occupied by P1 |
| P2 | Port 5 | Resource 5 | Port 7 | Resource 7 | 1 | Occupied by P1 |

According to the information about the protection trail P2 (such as the identifier P2) in the protection switching request message, the intermediate node A4 may determine that the protection trail P2 requests the switching of the protection trail, and determine that the protection path resource of A4 is already occupied by the protection trail P1. Further, the intermediate node A4 determines priority levels of the protection trail P1 and the protection trail P2, where the priority of the protection trail P2 is higher than the priority of the protection trail P1. The protection path resource of A4 is occupied by the lower-priority protection trail (the protection trail P1), and it is determined that the protection path resource of A4 is available. Still further, the intermediate node A4 determines that the protection trail P1 and the protection trail P2 have a same inbound port resource but different outbound port resources, and the intermediate node A4 is not a shared connection resource of the two protection trails. Therefore, the intermediate node A4 tears down the current cross-connection, and establishes a cross-connection of A4 occupied by the protection trail P2, that is, establishes a cross-connection between the protection path resource in the link A3-A4 and the protection path resource in the link A4-S2, and sends a protection switching request message, which is for establishing the protection trail P2, to the intermediate node A3. Optionally, the intermediate node A4 changes the configuration information of the intermediate node A4 correspondingly, and records the resource occupation information as that the resource is occupied by P2. Optionally, the intermediate node A4 returns a message to the end node S1, where the message indicates that the protection path resource is pre-empted.

The intermediate node A3 determines, according to the received protection switching request message sent by the intermediate node A4, whether a protection path resource of A3 is available. Optionally, the intermediate node A3 may determine, according to the information about the protection trail P2 and preset configuration information of the intermediate node A3, whether the protection path resource is available. For example, the configuration information of the intermediate node A3 may be illustratively represented as follows (in a tabular form):

**Table 8 Configuration information of the intermediate node A3 (using the S1-to-W1 direction as a reference direction)**

| Protection trail identifier | Inbound port | Inbound port resource | Outbound port | Outbound port resource | Priority | Resource occupation information |
|---|---|---|---|---|---|---|
| P1 | Port 4 | Resource 4 | Port 5 | Resource 5 | 2 | Occupied by P1 |
| P2 | Port 4 | Resource 4 | Port 5 | Resource 5 | 1 | Occupied by P1 |

According to the information about the protection trail P2 (such as the identifier P2) in the protection switching request message, the intermediate node A3 may determine that the protection trail P2 requests the switching of the protection trail, and determine that the protection path resource of A3 is already occupied by the protection trail P1. Further, the intermediate node A3 determines the priority levels of the protection trail P1 and the protection trail P2, where the priority of the protection trail P2 is higher than the priority of the protection trail P1. The protection path resource of A3 is occupied by the lower-priority protection trail (the protection trail P1), and it is determined that the protection path resource of A3 is available. Still further, the intermediate node A3 determines that the protection trail P1 and the protection trail P2 have same outbound and inbound port resources, and the intermediate node A3 is a shared connection resource of the two protection trails. Therefore, the intermediate node A3 may reserve the established cross-connection, and send a protection switching request message, which is for establishing the protection trail P2, to a downstream neighboring node (the intermediate node A2) of the intermediate node A3. Optionally, the intermediate node A3 changes the configuration information of the intermediate node A2 correspondingly, and records the resource occupation information as that the resource is occupied by P2.

Operations of the intermediate node A2 are similar to operations of the intermediate node A3, and operations of the intermediate node A1 are similar to operations of the intermediate node A4, and they are not described here anymore.

When the end node S1 receives a message sent by the intermediate node A3 or the intermediate node A4, where the message indicates that the protection path resource is pre-empted, the end node S1 may tear down the current cross-connection and take a corresponding measure, for example, switch a service to another protection trail.

According to this embodiment of the present invention, when a higher-priority protection trail pre-empts a shared protection path resource of a lower-priority protection trail, an intermediate node serving as a shared connection resource does not need to configure a cross-connection repeatedly, thereby reducing operation complexity. When it is determined that a protection channel resource is available, a connection of the protection trail is established, thereby reducing time required for protection switching. In this way, the protection switching can be performed quickly while resource usage is increased, thereby improving efficiency.

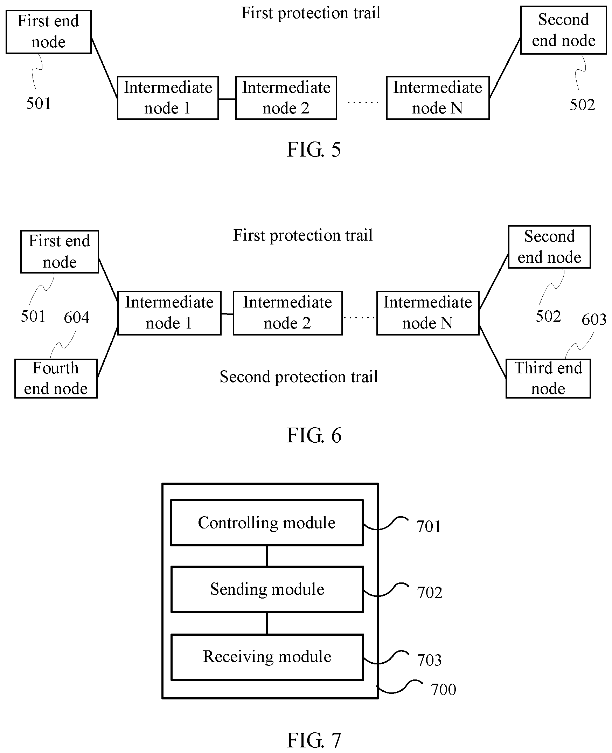

FIG. 5 is a schematic block diagram of a protection switching system according to an embodiment of the present invention. A protection switching system 500 in FIG. 5 includes a first end node, a second end node, and at least one intermediate node (that is, N intermediate nodes, where N is a positive integer) which is an intermediate node 1, an intermediate node 2,..., and an intermediate node N. It should be understood that this embodiment of the present invention does not limit the number of intermediate nodes, which may be 1 or more. In the present invention, the first end node may be either of the two end nodes on a first protection trail, and may be a source node or a destination node, which is not limited by this embodiment of the present invention.

A first end node 501 is configured to: when a working trail between the first end node 501 and a second end node 502 is faulty, interrupt transmission of a service flow and send a protection switching request message to a downstream neighboring node (the intermediate node 1) of the first end node 501, where the protection switching request message includes information about a first protection trail, the first protection trail includes the first end node 501, the second end node 502, and at least one intermediate node (N intermediate nodes, which are the intermediate node 1, the intermediate node 2,..., and the intermediate node N), and the at least one intermediate node is located between the first end node 501 and the second end node 502.

The intermediate node (any one of the N intermediate nodes) is configured to: according to information about the first protection trail, determine whether a protection path resource of the intermediate node is available; if the protection path resource of the intermediate node is unavailable, return a protection switching failure message; and if the protection path resource of the intermediate node is available, determine establishment of a cross-connection of the intermediate node occupied by the first protection trail, and send the protection switching request message to a downstream neighboring node of the intermediate node, where the downstream neighboring node of the intermediate node is an intermediate node or the second end node (for example, the downstream neighboring node of the intermediate node 1 is the intermediate node 2, and the downstream neighboring node of the intermediate node N is the second end node 502).

The second end node 502 is configured to: according to the protection switching request message, establish a cross-connection of the second end node occupied by the first protection trail, and return a confirmation message to the first end node 501, so that the first end node 501 continues the transmission of the service flow over the first protection trail according to the confirmation message.

In this embodiment of the present invention, when a working trail between a first end node and a second end node is faulty, the first end node interrupts transmission of a service flow and sends a protection switching request message hop by hop to each intermediate node among at least one intermediate node of a first protection trail; each intermediate node determines, according to information about the first protection trail in the protection switching request message, whether its own protection path resource is available, where the protection path resource may be shared by multiple working trails; after receiving the protection switching request message, if determining that the protection path resource is available, each intermediate node determines establishment of a cross-connection occupied by the first protection trail, and the second end node returns a confirmation message to the first end node, thereby reducing time required for protection switching. In this way, the protection switching can be performed quickly while resource usage is increased, thereby improving efficiency. In addition, the transmission of the service flow is interrupted when the first end node initiates a protection switching process, thereby preventing service misconnection in the protection switching process.

Protection path resources of a node refer to a protection path resource of a corresponding protection trail in a link between the node and its upstream neighboring node and a protection path resource of the corresponding protection trail in a link between the node and its downstream neighboring node. Establishing a cross-connection of the first protection trail on an intermediate node refers to establishing a cross-connection that is corresponding to the first protection trail and is between a protection path resource in a link between the node and its upstream neighboring node and a protection path resource in a link between the node and its downstream neighboring node.

It should be understood that there may be one or more protection path resources in a link between nodes, and there may be one or more cross-connections of the node, which are not limited by this embodiment of the present invention. For ease of description, it is assumed that there is one protection path resource in the link between the nodes in this embodiment of the present invention.

In another embodiment of the present invention, functions of each node in this system may be further extended. The protection switching system in FIG. 5 may implement corresponding steps in the methods in FIG. 1 to FIG. 4, and therefore repeated description is omitted properly.

Exemplarily, the first end node 501 may be further configured to establish a cross-connection of the first end node 501 occupied by the first protection trail, and suspend switching of the service flow to the first protection trail. Alternatively, the first end node 501 may be further configured to: after receiving the confirmation message returned by the second end node 502, establish a cross-connection of the first end node occupied by the first protection trail, and continue the transmission of the service flow over the first protection trail.

Therefore, the transmission of the service flow is interrupted when the first end node learns occurrence of a fault on the working trail and initiates a protection switching process, and a service is switched to the protection trail only after the confirmation message returned by the second end node is received, that is, after it is determined that the protection path resources on the first protection trail are all available. In this way, service misconnection is prevented in the protection switching process, and reliability of protection switching is improved.

Exemplarily, that the protection path resource is available may be: the protection path resource is idle. The intermediate node may be further configured to: before sending the protection switching request to the downstream neighboring node, if determining that the protection path resource of the intermediate node is available and it is a case in which the protection path resource is idle, establish the cross-connection of the intermediate node occupied by the first protection trail.

Exemplarily, the system 500 may further include a third end node 603 and a fourth end node 604. As shown in FIG. 6, a second protection trail includes the third end node 603, the fourth end node 604, and the N intermediate nodes. That the protection path resource of the intermediate node is idle may also be: a priority of the first protection trail is higher than a priority of a second protection trail, and the second protection trail currently occupies the protection path resource of the intermediate node. The intermediate node may be further configured to: determine whether the protection path resource of the intermediate node is a shared connection resource of the first protection trail and the second protection trail; if the protection path resource of the intermediate node is the shared connection resource, reserve a current cross-connection of the intermediate node; and if the intermediate node is not the shared connection resource, tear down a cross-connection of the intermediate node currently occupied by the second protection trail, and establish the cross-connection of the intermediate node occupied by the first protection trail. The shared connection resource means that protection path resources of links between the intermediate node and two neighboring nodes are the same on both the first protection trail and the second protection trail.

According to this embodiment of the present invention, when a higher-priority protection trail pre-empts a protection path resource of a shared node of a lower-priority protection trail, an intermediate node serving as a shared connection resource does not need to configure a cross-connection repeatedly, thereby reducing operation complexity, further reducing time of protection switching, and improving efficiency.

Optionally, the intermediate node may be further configured to: before establishing the cross-connection of the intermediate node occupied by the first protection trail, send a message indicating that the protection path resource is pre-empted to the third end node 603 or the fourth end node 604.

It should be understood that the example in FIG. 6 is merely exemplary and is not intended to limit the scope of the present invention. For example, there may be two or more protection trails and there may be one or more nodes shared on multiple protection trails, and the shared connection resources in the shared protection path resources of different protection trails may be one intermediate node or may be multiple intermediate nodes.

Exemplarily, the second end node 502 may be further configured to transparently transmit the confirmation message to the first end node 501 through an overhead channel between the first end node 501 and the second end node 502 and via the at least one intermediate node.

Therefore, the intermediate node does not need to decipher or process the confirmation message, and the second end node 502 may transparently transmit the confirmation message to the first end node 501 directly via the intermediate node, thereby further reducing the time of protection switching. Certainly, the confirmation message may also be returned to the first end node 501 by using a hop-by-hop overhead path, which is not limited by this embodiment of the present invention.

Optionally, the intermediate node may be further configured to: according to the information about the first protection trail and configuration information of the intermediate node, determine whether the protection path resource of the intermediate node is available, where the configuration information of the intermediate node includes an identifier of at least one protection trail, a priority of the at least one protection trail, resource occupation information of the at least one protection trail, and information about an outbound port and an inbound port of the intermediate node, and the at least one protection trail includes the first protection trail. The configuration information of the intermediate node may be preset on a corresponding intermediate node. The intermediate node may be further configured to change the configuration information of the intermediate node.

FIG. 7 is a structural block diagram of a first end node according to an embodiment of the present invention. A first end node 700 in FIG. 7 is an example of the first end node 501 in the protection switching system 500, and includes a controlling module 701, a sending module 702, and a receiving module 703.

The controlling module 701 is configured to: when a working trail between the first end node and a second end node is faulty, interrupt transmission of a service flow.

The sending module 702 is configured to send a protection switching request message to a downstream neighboring node of the first end node, where: the protection switching request message includes information about a first protection trail; the first protection trail includes the first end node, the second end node, and at least one intermediate node; the at least one intermediate node is located between the first end node and the second end node, so that each intermediate node among the at least one intermediate node determines, according to the information about the first protection trail, whether a protection path resource of the intermediate node is available; and the downstream neighboring node of the first end node is a node among the at least one intermediate node.

The receiving module is configured to: receive a protection switching failure message returned by the intermediate node, where the protection switching failure message is used to indicate that the protection path resource of the intermediate node is unavailable; or receive a confirmation message returned by the second end node, so that the controlling module 701 continues the transmission of the service flow over the first protection trail according to the confirmation message.

In the present invention, the first end node may be either of the two end nodes on the first protection trail, and may be a source node or a destination node, which is not limited by this embodiment of the present invention.

In this embodiment of the present invention, when a working trail between a first end node and a second end node is faulty, the first end node interrupts transmission of a service flow and sends a protection switching request message hop by hop to each intermediate node among at least one intermediate node of a first protection trail; each intermediate node determines, according to information about the first protection trail in the protection switching request message, whether its own protection path resource is available, where the protection path resource may be shared by multiple working trails; after receiving the protection switching request message, if determining that the protection path resource is available, each intermediate node determines establishment of a cross-connection occupied by the first protection trail, and the second end node returns a confirmation message to the first end node, thereby reducing time required for protection switching. In this way, the protection switching can be performed quickly while resource usage is increased, thereby improving efficiency. In addition, the transmission of the service flow is interrupted when the first end node initiates a protection switching process, thereby preventing service misconnection in the protection switching process.

The first end node 700 may implement each step related to the first end node in the methods in FIG. 1 to FIG. 4. To avoid repetition, no repeated description is given here anymore.

Optionally, as an embodiment, the controlling module 701 may be specifically configured to establish a cross-connection of the first end node occupied by the first protection trail, and suspend switching of the service flow to the first protection trail. After the receiving module 703 receives the confirmation message returned by the second end node, the controlling module 701 may be further configured to continue the transmission of the service flow over the first protection trail.

Optionally, as another embodiment, the controlling module 701 may be further configured to: after the receiving module 703 receives the confirmation message returned by the second end node, establish a cross-connection of the first end node occupied by the first protection trail, and continue the transmission of the service flow over the first protection trail.

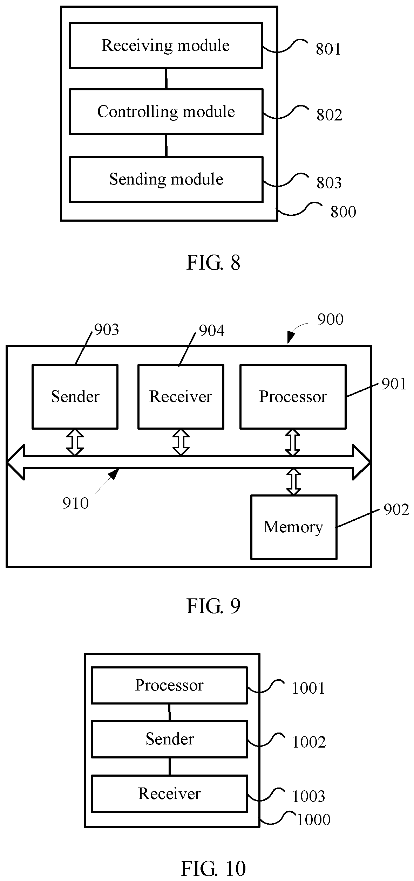

FIG. 8 is a structural block diagram of a second end node according to an embodiment of the present invention. A second end node 800 in FIG. 8 is an example of the second end node 502 in the protection switching system 500, and includes a receiving module 801, a controlling module 802, and a sending module 803.

The receiving module 801 is configured to receive a protection switching request message sent by an upstream neighboring node of the second end node, where: the protection switching request message includes information about a first protection trail; the first protection trail includes a first end node, the second end node, and at least one intermediate node; the at least one intermediate node is located between the first end node and the second end node; and the upstream neighboring node of the second end node is a node among the at least one intermediate node.

The controlling module 802 is configured to: according to the protection switching request message, establish a cross-connection of the second end node occupied by the first protection trail.

The sending module 803 is configured to return a confirmation message to the first end node, so that the first end node continues transmission of a service flow over the first protection trail according to the confirmation message.

The second end node 800 may implement each step related to the second end node in the methods in FIG. 1 to FIG. 4. To avoid repetition, no repeated description is given here anymore.

Optionally, as an embodiment, the sending module 803 may be further configured to transparently transmit the confirmation message to the first end node through an overhead channel between the first end node and the second end node and via the at least one intermediate node. Therefore, the intermediate node does not need to decipher or process the confirmation message, and the second end node may transparently transmit the confirmation message to the first end node directly via the intermediate node, thereby further reducing time of protection switching. Certainly, the confirmation message may also be returned to the first end node by using a hop-by-hop overhead path, which is not limited by this embodiment of the present invention.

The embodiments of the present invention further give an apparatus embodiment for implementing each step and method in the foregoing method embodiment. FIG. 9 shows an embodiment of a device. In this embodiment, a device 900 includes a processor 901, a memory 902, a sender 903, and a receiver 904. The processor 901 controls an operation of the device 900, and the processor 901 may also be called a CPU (Central Processing Unit, central processing unit). The memory 902 may include a read-only memory and a random access memory, and provide an instruction and data for the processor 901. A part of the memory 902 may further include a non-volatile random access memory (NVRAM). The processor 901, the memory 902, the sender 903, and the receiver 904 are coupled together by using a bus system 910, where the bus system 910 includes not only a data bus but also a power supply bus, a control bus, and a status signal bus. However, for clear description, various buses in the diagram are denoted by the bus system 910.

The method disclosed in the foregoing embodiment of the present invention may be applied to the device 900. The processor 901 may be an integrated circuit chip with a signal processing capability. In an implementation process, each step of the method may be implemented by an integrated logical circuit of hardware or a software instruction in the processor 901.

Further, FIG. 10 is a structural block diagram of a first end node according to an embodiment of the present invention. A first end node 1000 in FIG. 10 is an example of the first end node 501 in a protection switching system 500, and includes a processor 1001, a sender 1002, and a receiver 1003.

The processor 1001 is configured to: when a working trail between the first end node and a second end node is faulty, interrupt transmission of a service flow.

The sender 1002 is configured to send a protection switching request message to a downstream neighboring node of the first end node, where: the protection switching request message includes information about a first protection trail; the first protection trail includes the first end node, the second end node, and at least one intermediate node; the at least one intermediate node is located between the first end node and the second end node, so that each intermediate node among the at least one intermediate node determines, according to the information about the first protection trail, whether a protection path resource of the intermediate node is available; and the downstream neighboring node of the first end node is a node among the at least one intermediate node.

The receiver 1003 is configured to: receive a protection switching failure message returned by the intermediate node, where the protection switching failure message is used to indicate that the protection path resource of the intermediate node is unavailable; or receive a confirmation message returned by the second end node, so that the processor 1001 continues the transmission of the service flow over the first protection trail according to the confirmation message.

In the present invention, the first end node may be either of the two end nodes on the first protection trail, and may be a source node or a destination node, which is not limited by this embodiment of the present invention.

In this embodiment of the present invention, when a working trail between a first end node and a second end node is faulty, the first end node interrupts transmission of a service flow and sends a protection switching request message hop by hop to each intermediate node among at least one intermediate node of a first protection trail; each intermediate node determines, according to information about the first protection trail in the protection switching request message, whether its own protection path resource is available, where the protection path resource may be shared by multiple working trails; after receiving the protection switching request message, if determining that the protection path resource is available, each intermediate node determines establishment of a cross-connection occupied by the first protection trail, and the second end node returns a confirmation message to the first end node, thereby reducing time required for protection switching. In this way, the protection switching can be performed quickly while resource usage is increased, thereby improving efficiency. In addition, the transmission of the service flow is interrupted when the first end node initiates a protection switching process, thereby preventing service misconnection in the protection switching process.

The first end node 1000 may implement each step related to the first end node in the methods in FIG. 1 to FIG. 4. To avoid repetition, no repeated description is given here anymore.

Optionally, as an embodiment, the processor 1001 may be specifically configured to establish a cross-connection of the first end node occupied by the first protection trail, and suspend switching of the service flow to the first protection trail. After the receiver 1003 receives the confirmation message returned by the second end node, the processor 1001 may be further configured to continue the transmission of the service flow over the first protection trail.

Optionally, as another embodiment, the processor 1001 may be further configured to: after the receiver 1003 receives the confirmation message returned by the second end node, establish a cross-connection of the first end node occupied by the first protection trail, and continue the transmission of the service flow over the first protection trail.

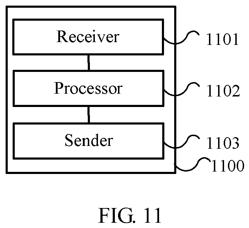

Further, FIG. 11 is a structural block diagram of a second end node according to an embodiment of the present invention. A second end node 1100 in FIG. 11 is an example of the second end node 502 in a protection switching system 500, and includes a receiver 1101, a processor 1102, and a sender 1103.

The receiver 1101 is configured to receive a protection switching request message sent by an upstream neighboring node of the second end node, where: the protection switching request message includes information about a first protection trail; the first protection trail includes a first end node, the second end node, and at least one intermediate node; the at least one intermediate node is located between the first end node and the second end node; and the upstream neighboring node of the second end node is a node among the at least one intermediate node.

The processor 1102 is configured to: according to the protection switching request message, establish a cross-connection of the second end node occupied by the first protection trail.

The sender 1103 is configured to return a confirmation message to the first end node, so that the first end node continues transmission of a service flow over the first protection trail according to the confirmation message.

The second end node 1100 may implement each step related to the second end node in the methods in FIG. 1 to FIG. 4. To avoid repetition, no repeated description is given here anymore.

Optionally, as an embodiment, the sender 1103 may be further configured to transparently transmit the confirmation message to the first end node through an overhead channel between the first end node and the second end node and via the at least one intermediate node.

Therefore, the intermediate node does not need to decipher or process the confirmation message, and the second end node may transparently transmit the confirmation message to the first end node directly via the intermediate node, thereby further reducing time of protection switching. Certainly, the confirmation message may also be returned to the first end node by using a hop-by-hop overhead path, which is not limited by this embodiment of the present invention.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication paths may be implemented through some interfaces. The indirect couplings or communication paths between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The software product is stored in a storage medium, and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A protection switching method, comprising:
interrupting (101), by a first end node, transmission of a service flow and sending a protection switching request message to a downstream neighboring node of the first end node when a working trail between the first end node and a second end node is faulty, wherein the protection switching request message comprises information about a first protection trail, the first protection trail comprises the first end node, the second end node, and at least one intermediate node, the at least one intermediate node is located between the first end node and the second end node, and the downstream neighboring node of the first end node is a node among the at least one intermediate node;
determining (102), by each intermediate node among the at least one intermediate node according to the information about the first protection trail, whether a protection path resource of the intermediate node is available; if the protection path resource of the intermediate node is unavailable, returning, by the intermediate node, a protection switching failure message; and if the protection path resource of the intermediate node is available, establishing, by the intermediate node, a cross-connection of the intermediate node occupied by the first protection trail, and sending the protection switching request message to a downstream neighboring node of the intermediate node, wherein the downstream neighboring node of the intermediate node is an intermediate node or the second end node; and
establishing (103), by the second end node according to the protection switching request message, a cross-connection of the second end node occupied by the first protection trail, and returning a confirmation message to the first end node, so that the first end node continues the transmission of the service flow over the first protection trail according to the confirmation message.

2. The method according to claim 1, wherein the interrupting (101), by a first end node, transmission of a service flow comprises:
establishing, by the first end node, a cross-connection of the first end node occupied by the first protection trail, and suspending switching of the service flow to the first protection trail.

3. The method according to claim 1, wherein the method further comprises:
after the first end node receives the confirmation message returned by the second end node, establishing, by the first end node, a cross-connection of the first end node occupied by the first protection trail, and continuing the transmission of the service flow over the first protection trail.

4. The method according to any one of claims 1 to 3, wherein that the protection path resource of the intermediate node is available comprises:
the protection path resource of the intermediate node is idle; or
a priority of the first protection trail is higher than a priority of a second protection trail, wherein the second protection trail comprises a third end node, a fourth end node, and the at least one intermediate node, and the second protection trail currently occupies the protection path resource of the intermediate node.

5. The method according to claim 4, wherein the priority of the first protection trail is higher than the priority of the second protection trail, and the determining, by the intermediate node, establishment of a cross-connection of the intermediate node occupied by the first protection trail comprises:
determining, by the intermediate node, whether the intermediate node is a shared connection resource of the first protection trail and the second protection trail; if the intermediate node is the shared connection resource, reserving, by the intermediate node, a current cross-connection of the intermediate node; and if the intermediate node is not the shared connection resource, tearing down, by the intermediate node, a cross-connection of the intermediate node currently occupied by the second protection trail, and establishing the cross-connection of the intermediate node occupied by the first protection trail, wherein:
the shared connection resource means that protection path resources of links between the intermediate node and two neighboring nodes are the same on both the first protection trail and the second protection trail.

6. The method according to any one of claims 1 to 5, wherein the returning a confirmation message to the first end node comprises:
transparently transmitting the confirmation message to the first end node through an overhead channel between the first end node and the second end node and via the at least one intermediate node.

7. The method according to any one of claims 1 to 6, wherein the determining (102), by the intermediate node according to the information about the first protection trail, whether a protection path resource of the intermediate node is available comprises:
determining, by the intermediate node according to the information about the first protection trail and configuration information of the intermediate node, whether the protection path resource of the intermediate node is available, wherein:
the configuration information of the intermediate node comprises an identifier of at least one protection trail, a priority of the at least one protection trail, resource occupation information of the at least one protection trail, and information about an outbound port and an inbound port of the intermediate node, and the at least one protection trail comprises the first protection trail.

8. A protection switching system, comprising a first end node (501), a second end node (502), and at least one intermediate node, wherein:
the first end node (501) is configured to: when a working trail between the first end node and the second end node is faulty, interrupt transmission of a service flow and send a protection switching request message to a downstream neighboring node of the first end node, wherein the protection switching request message comprises information about a first protection trail, the first protection trail comprises the first end node, the second end node, and the least one intermediate node, the at least one intermediate node is located between the first end node and the second end node, and the downstream neighboring node of the first end node is a node among the at least one intermediate node;
the intermediate node is configured to: according to the information about the first protection trail, determine whether a protection path resource of the intermediate node is available; if the protection path resource of the intermediate node is unavailable, return a protection switching failure message; and if the protection path resource of the intermediate node is available, establish a cross-connection of the intermediate node occupied by the first protection trail, and send the protection switching request message to a downstream neighboring node of the intermediate node, wherein the downstream neighboring node of the intermediate node is an intermediate node or the second end node; and
the second end node (502) is configured to: according to the protection switching request message, establish a cross-connection of the second end node occupied by the first protection trail, and return a confirmation message to the first end node, so that the first end node continues the transmission of the service flow over the first protection trail according to the confirmation message.

9. The system according to claim 8, wherein:
the first end node (501) is further configured to establish a cross-connection of the first end node occupied by the first protection trail, and suspend switching of the service flow to the first protection trail.

10. The system according to claim 8, wherein:
the first end node (501) is further configured to: after receiving the confirmation message returned by the second end node (502), establish a cross-connection of the first end node occupied by the first protection trail, and continue the transmission of the service flow over the first protection trail.

11. The system according to any one of claims 8 to 10, wherein that the protection path resource of the intermediate node is available comprises: the protection path resource of the intermediate node is idle.

12. The system according to any one of claims 8 to 10, wherein the system further comprises a third end node (603) and a fourth end node (604), and that the protection path resource is available comprises: a priority of the first protection trail is higher than a priority of a second protection trail, wherein the second protection trail comprises the third end node, the fourth end node, and the at least one intermediate node, and the second protection trail currently occupies the protection path resource of the intermediate node.

13. The system according to claim 12, wherein:
the intermediate node is further configured to: determine whether the protection path resource of the intermediate node is a shared connection resource of the first protection trail and the second protection trail; if the protection path resource of the intermediate node is the shared connection resource, reserve a current cross-connection of the intermediate node; and if the intermediate node is not the shared connection resource, tear down a cross-connection of the intermediate node currently occupied by the second protection trail, and establish the cross-connection of the intermediate node occupied by the first protection trail, wherein:
the shared connection resource means that protection path resources of links between the intermediate node and two neighboring nodes are the same on both the first protection trail and the second protection trail.

14. The system according to any one of claims 8 to 13, wherein:
the second end node (502) is further configured to transparently transmit the confirmation message to the first end node (501) through an overhead channel between the first end node and the second end node and via the at least one intermediate node.

15. The system according to any one of claims 8 to 14, wherein:
the intermediate node is further configured to: according to the information about the first protection trail and configuration information of the intermediate node, determine whether the protection path resource of the intermediate node is available, wherein:
the configuration information of the intermediate node comprises an identifier of at least one protection trail, a priority of the at least one protection trail, resource occupation information of the at least one protection trail, and information about an outbound port and an inbound port of the intermediate node, and the at least one protection trail comprises the first protection trail.

## Patentansprüche

1. Schutzschaltverfahren, das Folgendes umfasst:
Unterbrechen (101) durch einen ersten Endknoten der Übertragung eines Dienststroms und Senden einer Schutzschaltanforderungsnachricht zu einem nachgelagerten Nachbarknoten des ersten Endknotens, wenn ein Arbeitsweg zwischen dem ersten Endknoten und einem zweiten Endknoten fehlerhaft ist, wobei die Schutzschaltanforderungsnachricht Informationen über einen ersten Schutzweg umfasst, der erste Schutzweg den ersten Endknoten, den zweiten Endknoten und wenigstens einen Zwischenknoten umfasst, der wenigstens eine erste Zwischenknoten sich zwischen dem ersten Endknoten und dem zweiten Endknoten befindet und der nachgelagerte Nachbarknoten des ersten Endknotens ein Knoten unter dem wenigstens einen Zwischenknoten ist;
Bestimmen (102) durch jeden Zwischenknoten unter dem wenigstens einen Zwischenknoten gemäß den Informationen über den ersten Schutzweg, ob ein Schutzpfadbetriebsmittel des Zwischenknotens verfügbar ist; falls das Schutzpfadbetriebsmittel des Zwischenknotens nicht verfügbar ist, Zurückgeben durch den Zwischenknoten einer Schutzschaltfehlernachricht; und falls das Schutzpfadbetriebsmittel des Zwischenknotens verfügbar ist, Aufbauen durch den Zwischenknoten einer Querverbindung des Zwischenknotens, der durch den ersten Schutzweg besetzt ist, und Senden der Schutzschaltanforderungsnachricht zu einem nachgelagerten Nachbarknoten des Zwischenknotens, wobei der nachgelagerte Nachbarknoten des Zwischenknotens ein Zwischenknoten oder der zweite Endknoten ist; und
Aufbauen (103) durch den zweiten Endknoten gemäß der Schutzschaltanforderungsnachricht einer Querverbindung des zweiten Endknotens, der durch den ersten Schutzweg besetzt ist, und Zurückgeben einer Bestätigungsnachricht zu dem ersten Endknoten, so dass der erste Endknoten die Übertragung des Dienststroms über den ersten Schutzweg gemäß der Bestätigungsnachricht fortsetzt.

2. Verfahren nach Anspruch 1, wobei das Unterbrechen (101) durch einen ersten Endknoten der Übertragung eines Dienststroms Folgendes umfasst:
Aufbauen durch den ersten Endknoten einer Querverbindung des ersten Endknotens, der durch den ersten Schutzweg besetzt ist, und Aussetzen des Schaltens des Dienststroms zu dem ersten Schutzweg.

3. Verfahren nach Anspruch 1, wobei das Verfahren ferner Folgendes umfasst:
nachdem der erste Endknoten die Bestätigungsnachricht, die durch den zweiten Endknoten zurückgegeben wird, empfangen hat, Aufbauen durch den ersten Endknoten einer Querverbindung des ersten Endknotens, der durch den ersten Schutzweg besetzt ist, und Fortsetzen der Übertragung des Dienststroms über den ersten Schutzweg.

4. Verfahren nach einem der Ansprüche 1 bis 3, wobei dass das Schutzpfadbetriebsmittel des Zwischenknotens verfügbar ist, Folgendes umfasst:
das Schutzpfadbetriebsmittel des Zwischenknotens ist frei; oder
eine Priorität des ersten Schutzwegs ist höher als eine Priorität eines zweiten Schutzwegs, wobei der zweite Schutzweg einen dritten Endknoten, einen vierten Endknoten und den wenigstens einen Zwischenknoten umfasst und der zweite Schutzweg derzeit das Schutzpfadbetriebsmittel des Zwischenknotens besetzt.

5. Verfahren nach Anspruch 4, wobei die Priorität des ersten Schutzwegs höher ist als die Priorität des zweiten Schutzwegs und das Bestimmen durch den Zwischenknoten des Aufbaus einer Querverbindung des Zwischenknotens, der durch den ersten Schutzweg besetzt ist, Folgendes umfasst:
Bestimmen durch den Zwischenknoten, ob der Zwischenknoten ein gemeinsam verwendetes Verbindungsbetriebsmittel des ersten Schutzwegs und des zweiten Schutzwegs ist; falls der Zwischenknoten das gemeinsam verwendete Verbindungsbetriebsmittel ist, Reservieren durch den Zwischenknoten einer aktuellen Querverbindung des Zwischenknotens; und falls der Zwischenknoten nicht das gemeinsam verwendete Verbindungsbetriebsmittel ist, Abbauen durch den Zwischenknoten einer Querverbindung des Zwischenknotens, der derzeit durch den zweiten Schutzweg besetzt ist, und Aufbauen der Querverbindung des Zwischenknotens, der durch den ersten Schutzweg besetzt ist, wobei:
das gemeinsam verwendete Verbindungsbetriebsmittel bedeutet, dass Schutzpfadbetriebsmittel von Strecken zwischen dem Zwischenknoten und zwei benachbarten Knoten auf sowohl dem ersten Schutzweg als auch dem zweiten Schutzweg dieselben sind.

6. Verfahren nach einem der Ansprüche 1 bis 5, wobei das Zurückgeben einer Bestätigungsnachricht zu dem ersten Endknoten Folgendes umfasst:
transparentes Übertragen der Bestätigungsnachricht zu dem ersten Endknoten durch einen "Overhead"-Kanal zwischen dem ersten Endknoten und dem zweiten Endknoten und über den wenigstens einen Zwischenknoten.

7. Verfahren nach einem der Ansprüche 1 bis 6, wobei das Bestimmen (102) durch den Zwischenknoten gemäß den Informationen über den ersten Schutzweg, ob ein Schutzpfadbetriebsmittel des Zwischenknotens verfügbar ist, Folgendes umfasst:
Bestimmen durch den Zwischenknoten gemäß den Informationen über den ersten Schutzweg und Konfigurationsinformationen des Zwischenknotens, ob das Schutzpfadbetriebsmittel des Zwischenknotens verfügbar ist, wobei:
die Konfigurationsinformationen des Zwischenknotens eine Kennung des wenigstens einen Schutzwegs, eine Priorität des wenigstens einen Schutzwegs, Betriebsmittelbesetzungsinformationen des wenigstens einen Schutzwegs und Informationen über einen abgehenden Anschluss und einen eingehenden Anschluss des Zwischenknotens umfassen und der wenigstens eine Schutzweg den ersten Schutzweg umfasst.

8. Schutzschaltsystem, das einen ersten Endknoten (501), einen zweiten Endknoten (502) und wenigstens einen Zwischenknoten umfasst, wobei:
der erste Endknoten (501) konfiguriert ist: wenn ein Arbeitsweg zwischen dem ersten Endknoten und dem zweiten Endknoten fehlerhaft ist, die Übertragung eines Dienststroms zu unterbrechen und eine Schutzschaltanforderungsnachricht zu einem nachgelagerten Nachbarknoten des ersten Endknotens zu senden, wobei die Schutzschaltanforderungsnachricht Informationen über einen ersten Schutzweg umfasst, der erste Schutzweg den ersten Endknoten, den zweiten Endknoten und wenigstens einen Zwischenknoten umfasst, sich der wenigstens eine Zwischenknoten zwischen dem ersten Endknoten und dem zweiten Endknoten befindet und der nachgelagerte Nachbarknoten des ersten Endknotens ein Knoten unter dem wenigstens einen Zwischenknoten ist;
der Zwischenknoten konfiguriert ist: gemäß den Informationen über den ersten Schutzweg zu bestimmen, ob ein Schutzpfadbetriebsmittel des Zwischenknotens verfügbar ist; falls das Schutzpfadbetriebsmittel des Zwischenknotens nicht verfügbar ist, eine Schutzschaltfehlernachricht zurückzugeben; und falls das Schutzpfadbetriebsmittel des Zwischenknotens verfügbar ist, eine Querverbindung des Zwischenknotens, der durch den ersten Schutzweg besetzt ist, aufzubauen und die Schutzschaltanforderungsnachricht zu einem nachgelagerten Nachbarknoten des Zwischenknotens zu senden, wobei der nachgelagerte Nachbarknoten des Zwischenknotens ein Zwischenknoten oder der zweite Endknoten ist; und
der zweite Endknoten (502) konfiguriert ist: gemäß der Schutzschaltanforderungsnachricht eine Querverbindung des zweiten Endknotens, der durch den ersten Schutzweg besetzt ist, aufzubauen und eine Bestätigungsnachricht zu dem ersten Endknoten zurückzugeben, so dass der erste Endknoten mit der Übertragung des Dienststroms über den ersten Schutzweg gemäß der Bestätigungsnachricht fortfährt.

9. System nach Anspruch 8, wobei:
der erste Endknoten (501) ferner konfiguriert ist, eine Querverbindung des ersten Endknotens, der durch den ersten Schutzweg besetzt ist, aufzubauen und Schalten des Dienststroms zu dem ersten Schutzweg auszusetzen.

10. System nach Anspruch 8, wobei:
der erste Endknoten (501) ferner konfiguriert ist: nach dem Empfangen der Bestätigungsnachricht, die durch den zweiten Endknoten (502) zurückgegeben wird, eine Querverbindung des ersten Endknotens, der durch den ersten Schutzweg besetzt ist, aufzubauen und die Übertragung des Dienststroms über den ersten Schutzweg fortzusetzen.

11. System nach einem der Ansprüche 8 bis 10, wobei dass das Schutzpfadbetriebsmittel des Zwischenknotens verfügbar ist, Folgendes umfasst: das Schutzpfadbetriebsmittel des Zwischenknotens ist frei.

12. System nach einem der Ansprüche 8 bis 10, wobei das System ferner einen dritten Endknoten (603) und einen vierten Endknoten (604) umfasst, und dass das Schutzpfadbetriebsmittel verfügbar ist, Folgendes umfasst: eine Priorität des ersten Schutzwegs ist höher als eine Priorität eines zweiten Schutzwegs, wobei der zweite Schutzweg den dritten Endknoten, den vierten Endknoten und den wenigstens einen Zwischenknoten umfasst und der zweite Schutzweg derzeit das Schutzpfadbetriebsmittel des Zwischenknotens besetzt.

13. System nach Anspruch 12, wobei:
der Zwischenknoten ferner konfiguriert ist: zu bestimmen, ob das Schutzpfadbetriebsmittel des Zwischenknotens ein gemeinsam verwendetes Verbindungsbetriebsmittel des ersten Schutzwegs und des zweiten Schutzwegs ist; falls das Schutzpfadbetriebsmittel des Zwischenknotens das gemeinsam verwendete Verbindungsbetriebsmittel ist, eine aktuelle Querverbindung des Zwischenknotens zu reservieren; und falls der Zwischenknoten nicht das gemeinsam verwendete Verbindungsbetriebsmittel ist, eine Querverbindung des Zwischenknotens, der derzeit durch den zweiten Schutzweg besetzt ist, abzubauen und die Querverbindung des Zwischenknotens, der durch den ersten Schutzweg besetzt ist, aufzubauen, wobei:
das gemeinsam verwendete Verbindungsbetriebsmittel bedeutet, dass Schutzpfadbetriebsmittel von Strecken zwischen dem Zwischenknoten und zwei benachbarten Knoten auf sowohl dem ersten Schutzweg als auch dem zweiten Schutzweg dieselben sind.

14. System nach einem der Ansprüche 8 bis 13, wobei:
der zweite Endknoten (502) ferner konfiguriert ist, die Bestätigungsnachricht transparent zu dem ersten Endknoten (501) durch einen "Overhead"-Kanal zwischen dem ersten Endknoten und dem zweiten Endknoten und über den wenigstens einen Zwischenknoten zu übertragen.

15. System nach einem der Ansprüche 8 bis 14, wobei:
der Zwischenknoten ferner konfiguriert ist: gemäß den Informationen über den ersten Schutzweg und Konfigurationsinformationen des Zwischenknotens zu bestimmen, ob das Schutzpfadbetriebsmittel des Zwischenknotens verfügbar ist, wobei:
die Konfigurationsinformationen des Zwischenknotens eine Kennung des wenigstens einen Schutzwegs, eine Priorität des wenigstens einen Schutzwegs, Betriebsmittelbesetzungsinformationen des wenigstens einen Schutzwegs und Informationen über einen abgehenden Anschluss und einen eingehenden Anschluss des Zwischenknotens umfassen und der wenigstens eine Schutzweg den ersten Schutzweg umfasst.

## Revendications

1. Procédé de commutation de protection, comprenant les étapes suivantes :
interrompre (101), par un premier noeud d'extrémité, la transmission d'un flux de service et envoyer un message de requête de commutation de protection à un noeud voisin aval du premier noeud d'extrémité lorsqu'une piste de travail entre le premier noeud d'extrémité et un deuxième noeud d'extrémité est défectueuse, le message de requête de commutation de protection comportant des informations concernant une première piste de protection, la première piste de protection comportant le premier noeud d'extrémité, le deuxième noeud d'extrémité, et au moins un noeud intermédiaire, l'au moins un noeud intermédiaire étant situé entre le premier noeud d'extrémité et le deuxième noeud d'extrémité, et le noeud voisin aval du premier noeud d'extrémité étant un noeud parmi l'au moins un noeud intermédiaire ;
déterminer (102), par chaque noeud intermédiaire parmi l'au moins un noeud intermédiaire selon les informations concernant la première piste de protection, si une ressource de chemin de protection du noeud intermédiaire est disponible ; si la ressource de chemin de protection du noeud intermédiaire est indisponible, retourner, par le noeud intermédiaire, un message d'échec de commutation de protection ; et si la ressource de chemin de protection du noeud intermédiaire est disponible, établir, par le noeud intermédiaire, une connexion croisée du noeud intermédiaire occupé par la première piste de protection, et envoyer le message de requête de commutation de protection à un noeud voisin aval du noeud intermédiaire, le noeud voisin aval du noeud intermédiaire étant un noeud intermédiaire ou le deuxième noeud d'extrémité ; et
établir (103), par le deuxième noeud d'extrémité selon le message de requête de commutation de protection, une connexion croisée du deuxième noeud d'extrémité occupé par la première piste de protection, et retourner un message de confirmation au premier noeud d'extrémité, afin que le premier noeud d'extrémité continue la transmission du flux de service sur la première piste de protection selon le message de confirmation.

2. Procédé selon la revendication 1, dans lequel l'étape consistant à interrompre (101), par un premier noeud d'extrémité, la transmission d'un flux de service comprend :
établir, par le premier noeud d'extrémité, une connexion croisée du premier noeud d'extrémité occupé par la première piste de protection, et suspendre la commutation du flux de service vers la première piste de protection.

3. Procédé selon la revendication 1, dans lequel le procédé comprend en outre :
après que le premier noeud d'extrémité a reçu le message de confirmation retourné par le deuxième noeud d'extrémité, établir, par le premier noeud d'extrémité, une connexion croisée du premier noeud d'extrémité occupé par la première piste de protection, et continuer la transmission du flux de service sur la première piste de protection.

4. Procédé selon l'une quelconque des revendications 1 à 3, dans lequel la ressource de chemin de protection du noeud intermédiaire étant disponible comprend :
la ressource de chemin de protection du noeud intermédiaire est inactive ; ou
une priorité de la première piste de protection est supérieure à une priorité d'une deuxième piste de protection, la deuxième piste de protection comportant un troisième noeud d'extrémité, un quatrième noeud d'extrémité, et l'au moins un noeud intermédiaire, et la deuxième piste de protection occupant couramment la ressource de chemin de protection du noeud intermédiaire.

5. Procédé selon la revendication 4, dans lequel la priorité de la première piste de protection est supérieure à la priorité de la deuxième piste de protection, et l'étape consistant à déterminer, par le noeud intermédiaire, l'établissement d'une connexion croisée du noeud intermédiaire occupé par la première piste de protection comprend :
déterminer, par le noeud intermédiaire, si le noeud intermédiaire est une ressource de connexion partagée de la première piste de protection et de la deuxième piste de protection ; si le noeud intermédiaire est la ressource de connexion partagée, réserver, par le noeud intermédiaire, une connexion croisée courante du noeud intermédiaire ; et si le noeud intermédiaire n'est pas la ressource de connexion partagée, supprimer, par le noeud intermédiaire, une connexion croisée du noeud intermédiaire couramment occupé par la deuxième piste de protection, et établir la connexion croisée du noeud intermédiaire occupé par la première piste de protection :
la ressource de connexion partagée signifiant que des ressources de chemin de protection de liaisons entre le noeud intermédiaire et deux noeuds voisins sont les mêmes sur la première piste de protection ainsi que sur la deuxième piste de protection.

6. Procédé selon l'une quelconque des revendications 1 à 5, dans lequel l'étape consistant à retourner un message de confirmation au premier noeud d'extrémité comprend :
transmettre de façon transparente le message de confirmation au premier noeud d'extrémité par l'intermédiaire d'un canal de servitude entre le premier noeud d'extrémité et le deuxième noeud d'extrémité et par l'intermédiaire de l'au moins un noeud intermédiaire.

7. Procédé selon l'une quelconque des revendications 1 à 6, dans lequel l'étape consistant à déterminer (102), par le noeud intermédiaire selon les informations concernant la première piste de protection, si une ressource de chemin de protection du noeud intermédiaire est disponible comprend :
déterminer, par le noeud intermédiaire selon les informations concernant la première piste de protection et des informations de configuration du noeud intermédiaire, si la ressource de chemin de protection du noeud intermédiaire est disponible,
les informations de configuration du noeud intermédiaire comportant un identifiant d'au moins une piste de protection, une priorité de l'au moins une piste de protection, des informations d'occupation de ressource de l'au moins une piste de protection, et des informations concernant un port de sortie et un port d'entrée du noeud intermédiaire et l'au moins une piste de protection comportant la première piste de protection.

8. Système de commutation de protection, comprenant un premier noeud d'extrémité (501), un deuxième noeud d'extrémité (502), et au moins un noeud intermédiaire, dans lequel :
le premier noeud d'extrémité (501) est configuré pour : lorsqu'une piste de travail entre le premier noeud d'extrémité et le deuxième noeud d'extrémité est défectueuse, interrompre la transmission d'un flux de service et envoyer un message de requête de commutation de protection à un noeud voisin aval du premier noeud d'extrémité, le message de requête de commutation de protection comportant des informations concernant une première piste de protection, la première piste de protection comportant le premier noeud d'extrémité, le deuxième noeud d'extrémité, et l'au moins un noeud intermédiaire, l'au moins un noeud intermédiaire étant situé entre le premier noeud d'extrémité et le deuxième noeud d'extrémité, et le noeud voisin aval du premier noeud d'extrémité étant un noeud parmi l'au moins un noeud intermédiaire ;
le noeud intermédiaire est configuré pour : selon les informations concernant la première piste de protection, déterminer si une ressource de chemin de protection du noeud intermédiaire est disponible ; si la ressource de chemin de protection du noeud intermédiaire est indisponible, retourner un message d'échec de commutation de protection ; et si la ressource de chemin de protection du noeud intermédiaire est disponible, établir une connexion croisée du noeud intermédiaire occupé par la première piste de protection, et envoyer le message de requête de commutation de protection à un noeud voisin aval du noeud intermédiaire, le noeud voisin aval du noeud intermédiaire étant un noeud intermédiaire ou le deuxième noeud d'extrémité ; et
le deuxième noeud d'extrémité (502) est configuré pour : selon le message de requête de commutation de protection, établir une connexion croisée du deuxième noeud d'extrémité occupé par la première piste de protection, et retourner un message de confirmation au premier noeud d'extrémité, afin que le premier noeud d'extrémité continue la transmission du flux de service sur la première piste de protection selon le message de confirmation.

9. Système selon la revendication 8, dans lequel :
le premier noeud d'extrémité (501) est en outre configuré pour établir une connexion croisée du premier noeud d'extrémité occupé par la première piste de protection, et suspendre la commutation du flux de service vers la première piste de protection.

10. Système selon la revendication 8, dans lequel :
le premier noeud d'extrémité (501) est en outre configuré pour : après avoir reçu le message de confirmation retourné par le deuxième noeud d'extrémité (502), établir une connexion croisée du premier noeud d'extrémité occupé par la première piste de protection, et continuer la transmission du flux de service sur la première piste de protection.

11. Système selon l'une quelconque des revendications 8 à 10, dans lequel la ressource de chemin de protection du noeud intermédiaire étant disponible comprend : la ressource de chemin de protection du noeud intermédiaire est inactive.

12. Système selon l'une quelconque des revendications 8 à 10, dans lequel le système comprend en outre un troisième noeud d'extrémité (603) et un quatrième noeud d'extrémité (604), et la ressource de chemin de protection étant disponible comprend : une priorité de la première piste de protection est supérieure à une priorité d'une deuxième piste de protection, la deuxième piste de protection comportant le troisième noeud d'extrémité, le quatrième noeud d'extrémité, et l'au moins un noeud intermédiaire, et la deuxième piste de protection occupant couramment la ressource de chemin de protection du noeud intermédiaire.

13. Système selon la revendication 12, dans lequel :
le noeud intermédiaire est en outre configuré pour : déterminer si la ressource de chemin de protection du noeud intermédiaire est une ressource de connexion partagée de la première piste de protection et de la deuxième piste de protection ; si la ressource de chemin de protection du noeud intermédiaire est la ressource de connexion partagée, réserver une connexion croisée courante du noeud intermédiaire ; et si le noeud intermédiaire n'est pas la ressource de connexion partagée, supprimer une connexion croisée du noeud intermédiaire couramment occupé par la deuxième piste de protection, et établir la connexion croisée du noeud intermédiaire occupé par la première piste de protection :
la ressource de connexion partagée signifiant que des ressources de chemin de protection de liaisons entre le noeud intermédiaire et deux noeuds voisins sont les mêmes sur la première piste de protection ainsi que sur la deuxième piste de protection.

14. Système selon l'une quelconque des revendications 8 à 13, dans lequel :
le deuxième noeud d'extrémité (502) est en outre configuré pour transmettre de façon transparente le message de confirmation au premier noeud d'extrémité (501) par l'intermédiaire d'un canal de servitude entre le premier noeud d'extrémité et le deuxième noeud d'extrémité et par le biais de l'au moins un noeud intermédiaire.

15. Système selon l'une quelconque des revendications 8 à 14, dans lequel :
le noeud intermédiaire est en outre configuré pour : selon les informations concernant la première piste de protection et des informations de configuration du rioeud intermédiaire, déterminer si la ressource de chemin de protection du noeud intermédiaire est disponible,
les informations de configuration du noeud intermédiaire comportant un identifiant d'au moins une piste de protection, une priorité de l'au moins une piste de protection, des informations d'occupation de ressource de l'au moins une piste de protection, et des informations concernant un port de sortie et un port d'entrée du noeud intermédiaire, et l'au moins une piste de protection comportant la première piste de protection.
